# EUROPÄISCHE PATENTSCHRIFT

(11) **EP 2 593 231 B1**
(45) Veröffentlichungstag und Bekanntmachung des Hinweises auf die Patenterteilung: **10.10.2018**
(21) Anmeldenummer: 11748890.8
(22) Anmeldetag: 16.07.2011
(51) Int. Cl.: B01L 3/00, B81C 3/00

(54) **MIKROFLUIDISCHES SYSTEM UND HERSTELLUNGSVERFAHREN FÜR EIN MIKROFLUIDISCHES SYSTEM**
MICROFLUIDIC SYSTEM AND PRODUCTION METHOD FOR A MICROFLUIDIC SYSTEM
SYSTÈME MICROFLUIDIQUE ET PROCÉDÉ DE FABRICATION D'UN SYSTÈME MICROFLUIDIQUE

(30) Priorität: 16.07.2010 DE 102010031757
(43) Veröffentlichungstag der Anmeldung: 22.05.2013
(73) Patentinhaber: Fraunhofer-Gesellschaft zur Förderung der angewandten Forschung e.V., 80686 München (DE); Technische Universität Berlin, 10623 Berlin (DE)
(72) Erfinder: SCHRÖDER, Henning, 12621 Berlin (DE); ARNDT-STAUFENBIEL, Norbert, 10245 Berlin (DE); BRUSBERG, Lars, 13086 Berlin (DE)
(74) Vertreter: Pfenning, Meinig & Partner mbB
(86) Internationale Anmeldenummer: PCT/EP2011/003710
(87) Internationale Veröffentlichungsnummer: WO 2012/007182

(56) Entgegenhaltungen:
- EP-A1- 1 346 770
- EP-A1- 1 520 838
- WO-A1-2010/126992
- DE-A1- 10 249 105
- DE-A1-102007 047 014
- US-A1- 2002 176 804
- US-A1- 2006 188 213
- US-A1- 2009 147 253
- DZIUBAN J ET AL: "Silicon components for gas chromatograph", PROCEEDINGS OF THE SPIE - THE INTERNATIONAL SOCIETY FOR OPTICAL ENGINEERING SPIE-INT. SOC. OPT. ENG. USA, Bd. 4516, 2001, Seiten 249-257, XP002661600, ISSN: 0277-786X
- TRACHSEL ET AL: "Transparent silicon/glass microreactor for high-pressure and high-temperature reactions", CHEMICAL ENGINEERING JOURNAL, ELSEVIER SEQUOIA, LAUSANNE, CH, Bd. 135, 23. November 2007 (2007-11-23), Seiten S309-S316, XP022360671, ISSN: 1385-8947, DOI: 10.1016/J.CEJ.2007.07.049
- CASTANO-ALVAREZ ET AL: "Critical points in the fabrication of microfluidic devices on glass substrates", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 130, Nr. 1, 10. März 2008 (2008-03-10) , Seiten 436-448, XP022519702, ISSN: 0925-4005, DOI: 10.1016/J.SNB.2007.09.043
- HAN ET AL: "An active microfluidic system packaging technology", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, Bd. 122, Nr. 1, 21. Februar 2007 (2007-02-21), Seiten 337-346, XP005897259, ISSN: 0925-4005, DOI: 10.1016/J.SNB.2006.06.028

## Beschreibung

Die Erfindung betrifft ein mikrofluidisches System gemäß dem Oberbegriff des Hauptanspruchs sowie ein Herstellungsverfahren für ein mikrofluidisches System gemäß dem Oberbegriff des Nebenanspruchs.

Mikrofluidische Systeme, wie beispielsweise µTAS- oder Lab-on-a-Chip-Systeme, werden vielfach eingesetzt in der Medizintechnik und in der Analysetechnik zum Nachweis oder zur Analyse kleiner Stoffmengen oder einzelner lebender Zellen. Diese Systeme beinhalten einen Mikrofluidikchip mit einem Substrat, beispielsweise aus einem Glas oder einem Polymermaterial, in das ein oder mehrere mikrofluidische Kanäle zur Aufnahme des Analyts eingearbeitet sind, wobei in dem Mikrofluidikchip ferner weitere elektronische, optische oder mikromechanische Bauteile zur Untersuchung des Analyts integriert sein können.

Auf diese Weise kann auf einem kompakten und leicht transportierbaren Mikrofluidikchip eine hohe funktionale Integrität erzielt werden, welche komplexe biologische, chemische und physikalische Untersuchungen erlaubt. Vorteilhafterweise reichen hierfür bereits sehr geringe Mengen des zu untersuchenden Analyts (etwa im Bereich von Picolitern bis Millilitern) aus, was aus ökonomischer, ökologischer oder sicherheitsrelevanter Sicht von entscheidender Bedeutung sein kann, insbesondere bei geringen verfügbaren Stoffmengen oder bei stark toxischen Substanzen.

Zur Verbindung eines Mikrofluidikchips mit anderen möglichen Komponenten des mikrofluidischen Systems, wie beispielsweise Mikropumpen, Mikroventilen oder Mikrofiltern, werden häufig Kapillare verwendet, durch die das Analyt in den Mikrofluidikchip oder aus dem Mikrofluidikchip geführt werden kann. Dabei ist es zur Erhaltung der oben genannten Vorteile notwendig, dass in einem Anschlussbereich für eine solche Kapillare, also an einer Ein- oder Auslassöffnungen des Mikrofluidikchips, Totvolumen möglichst vermieden oder zumindest so gering wie möglich gehalten werden.

Große Totvolumen treten in mikrofluidischen Systemen jedoch regelmäßig dann auf, wenn zur Erzielung einer ausreichenden mechanischen Stabilität und Druckfestigkeit vergleichsweise große und stabile Verbindungselemente (wie Muffen, O-Ringe oder Dichtungen) an den Ein/Auslassöffnungen des Mikrofluidikchips vorgesehen sind. Dies ist besonders dann der Fall, wenn für einen ausreichend hohen Durchsatz des Analyts durch den Kanal oder die Kanäle des Mikrofluidikchips, deren Breite nur wenige Mikrometer betragen können, ein sehr hoher Druck des Analyts zumindest im Bereich der Ein/Auslassöffnungen des Mikrofluidikchips hergestellt werden muss.

Außerdem stehen große und sperrige Verbindungselemente einem möglichst kompakten Aufbau des mikrofluidischen Systems im Wege und bringen häufig auch hohe Herstellungs- und Materialkosten mit sich.

In der Druckschrift DE 102 49 105 B4 werden verschiedene Möglichkeiten zur Herstellung einer Verbindung eines Mikrofluidikchips mit einer Kapillare beschrieben. Es wird insbesondere ein Verfahren genannt, bei dem eine Kapillare in eine Ein/Auslassöffnung eines Wafers (Substrats) des Mikrofluidikchips eingeführt wird und am Rand der Kapillare mit dem Wafer mit einem Klebstoff stoffschlüssig verbunden (verklebt) wird. Der Klebstoff muss hierfür in die Ein/Auslassöffnung fließen können und zu diesem Zweck hinreichend flüssig sein. Bei niedrigviskosen (dünnflüssigen) Klebern besteht jedoch das Problem, dass diese leicht am Rand der Kapillare entlang in die Ein/Auslassöffnung fließen und diese dann verstopfen können.

In der Druckschrift US 6 273 478 wird ein weiteres Verfahren zur Herstellung einer Verbindung zwischen einem Mikrofluidikchip und einer Kapillare beschrieben, bei dem Muffen, O-Ring-Dichtungen oder auch direkt am Mikrofluidikchip in Spritzgussverfahren hergestellte Dichtungen verwendet werden. Die Kapillaren müssen in derartige Dichtungen häufig unter Aufwendung erheblicher Kräfte eingeführt werden, wobei der Mikrofluidikchip oder empfindliche Bauelemente auf dem Chip beschädigt werden können. Ferner sind derartige Dichtungen häufig sehr empfindlich gegenüber Scherkräften, bringen in der Regel ein großes Totvolumen mit sich und sind oftmals sperrig sowie aufwendig in der Herstellung.

Ein mikrofluidisches System gemäß dem Oberbegriff des Hauptanspruchs und ein Herstellungsverfahren gemäß dem Oberbegriff des Nebenanspruchs sind aus der Veröffentlichung DZIUBAN J et al., "Silicon components for gas chromatograph", Proceedings of the SPIE - The International Society for Optical Engineering, USA, (2001), Vol. 4516, Seiten 249 - 257, und aus der Veröffentlichung WO 2010/126992 A1 bekannt.

Es ist daher die Aufgabe der vorliegenden Erfindung, ein mikrofluidisches System vorzuschlagen, das die beschriebenen Nachteile im Stand der Technik überwindet. Das erfindungsgemäße mikrofluidische System mit einem Mikrofluidikchip und einer Kapillare soll also eine Verbindung zwischen dem Mikrofluidikchip und der Kapillare vorsehen, die nur ein geringes Totvolumen aufweist, sehr druckfest, mechanisch stabil und zuverlässig ist. Außerdem soll diese Verbindung kompakt sowie leicht und kostengünstig herstellbar sein. Es soll ferner ein entsprechendes Herstellungsverfahren für ein derartiges mikrofluidisches System vorgeschlagen werden, welches einfach und kostengünstig durchführbar ist und mit dem sich eine druckfeste, mechanisch stabile und kompakte Verbindung zwischen einem Mikrofluidikchip und einer Kapillare des mikrofluidischen System mit einem nur geringen Totvolumen herstellen lässt.

Diese Aufgabe wird erfindungsgemäß gelöst durch ein mikrofluidisches System gemäß dem Hauptanspruch sowie durch ein Herstellungsverfahren für ein derartiges mikrofluidisches System gemäß dem Nebenanspruch. Ausführungsformen und Weiterentwicklungen sind Gegenstände der abhängigen Ansprüche.

Demnach beinhaltet das erfindungsgemäße mikrofluidische System einen Mikrofluidikchip und eine aus Glas gefertigte Kapillare, wobei ein Endstück der Kapillare mit mindestens einer aus Glas gefertigten Substratschicht des Mikrofluidikchips stoffschlüssig verbunden ist, wobei die mindestens eine Substratschicht eine Innenwand einer Ein/Auslassöffnung des Mikrofluidikchips bildet. Das Endstück der Kapillare ist in die Ein/Auslassöffnung eingeführt ist und mit der Innenwand der Ein/Auslassöffnung verschweißt. Alternativ ist eine Stirnfläche des Endstücks mit einer an die Innenwand der Ein/Auslassöffnung angrenzenden Außenfläche der mindestens einen Substratschicht verschweißt. Das Endstück der Kapillare ist mit der mindestens einen Substratschicht diffusionsverschweißt ist.

Erfindungsgemäß kann das Endstück der Kapillare also in die Ein/Auslassöffnung des Mikrofluidikchips eingeführt sein und die Kapillare mit dem Mikrofluidikchip stoffschlüssig verbunden sein. Dabei ist das in die Ein/Auslassöffnung eingeführte Endstück der Kapillare mit einer Innenwand der Ein/Auslassöffnung, welche durch Teilbereiche eines mindestens eine Substratschicht umfassenden Substrats des Mikrofluidikchips gegeben ist, durch Erwärmen stoffschlüssig verbunden. In einer alternativen Ausführungsform der Erfindung ist das Endstück der Kapillare nicht in die Ein/Auslassöffnung eingeführt sondern befindet sich vorzugsweise vollständig außerhalb der Ein/Auslassöffnung, wobei zuerst eine Stirnfläche des Endstücks der Kapillare auf eine an die Ein/Auslassöffnung angrenzende Außenfläche des Substrats vorzugsweise formschlüssig aufgesetzt wird und anschließend stoffschlüssig mit dieser Außenfläche verbunden wird. Dabei ist die Stirnfläche der Kapillare so auf diese Außenfläche aufgesetzt, dass eine Ein/Auslassöffnung der Kapillare mit der Ein/Auslassöffnung des Mikrofluidikchips fluchtend ausgerichtet ist, so dass sich die genannten Öffnungen so überdecken, dass ein Flüssigkeitsaustausch zwischen Kapillare und Mikrofluidikchip ermöglicht wird. Dabei ist es jedoch nicht erforderlich, dass die Ein/Auslassöffnung der Kapillare mit der Ein/Auslassöffnung des Substrats in ihrer Form oder Größe genau übereinstimmt. Ein Teilbereich der genannten Außenfläche des Substrats, der in einem direkten, flächigen Berührungskontakt mit der Stirnfläche der Kapillare steht, umgibt die Ein/Auslassöffnung des Substrats im Allgemeinen ringförmig und hat die gleiche Form wie die Stirnfläche des Endstücks der Kapillare.

Ein solches System eignet sich aufgrund der großen Druckbeständigkeit der Verbindung zwischen Kapillare und Substrat zur Durchführung einer Vielzahl verschiedener mikrofluidischer Analyse- und Messverfahren, insbesondere der Hochleistungsflüssigkeitschromatographie (HPLC) sowie der Mikro-Zellzytomerie, der Refraktrometrie und der Elektrophorese. Das System kann auch als Zellreaktor oder als chemischer Mikroreaktor für organische oder anorganische Reaktionen verwendet werden.

Ein wesentlicher Vorteil des erfindungsgemäßen mikrofluidischen Systems ist das geringe Totvolumen, welches durch die mittels Erwärmen hergestellte stoffschlüssige Verbindung zwischen dem in die Ein/Auslassöffnung des Mikrofluidikchip eingeführten Endstück der Kapillare und der Innenwand dieser Ein/Auslassöffnung herstellbar ist, da die Kapillare direkt in die Ein/Auslassöffnung in dem Substrat eingeführt und direkt mit dem Substrat stoffschlüssig verbunden ist. Auch in dem oben beschriebenen Fall, dass die Stirnfläche der Kapillare stoffschlüssig mit der Außenfläche des Substrats verbunden ist, lassen sich sehr kleine Totvolumina erzielen. In beiden Fällen ist zwischen dem Substrat und der Kapillare ein stoffschlüssiger Verbund hergestellt (Substrat-Kapillare-Verbund). Je nach Wahl des Materials für das Substrat beziehungsweise für die Substratschichten des Substrats, wie erfindungsgemäß Glas, oder alternativ Silizium, Keramik oder ein Polymermaterial (wie etwa Plexiglas) und eines Materials für die Kapillare (wie erfindungsgemäß Glas oder alternativ beispielsweise ein Polymermaterial), handelt es sich bei dem genannten Substrat-Kapillare-Verbund erfindungsgemäß um einen Glas-Glas-Verbund oder alternativ beispielsweise um einen Silizium-Glas-Verbund, Keramik-Glas-Verbund, Polymer-Glas-Verbund oder einen Polymer-Polymer-Verbund. Insbesondere kommen als Materialien für das Substrat beziehungsweise für die Substratschichten sowie für die Kapillare des erfindungsgemäßen Systems beispielsweise folgende Materialien in Frage: Kieselglas, Borosilikatglas, Kalknatronglas. In zur Erfindung alternativen System kommen als Materialien für die Kapillare beziehungsweise für das Substrat beispielsweise reines Silizium, dotiertes Silizium, Aluminiumoxid, Aluminiumnitrid oder Polymere in Frage. Es ist also möglich, für das Substrat Materialien auszuwählen, die von dem Material der Kapillare verschieden sind. Beispielsweise lässt sich eine Kapillare aus Kieselglas mit einem Substrat aus relativ kostengünstigem Borosilikatglas verlöten oder verschweißen. Beim Verbinden von Materialien können möglicherweise voneinander verschiedene Ausdehnungskoeffizienten der Materialien durch eine geeignete Prozessführung berücksichtigt werden, wie weiter unten beschrieben wird.

Für die hier vorgeschlagene Verbindung zwischen dem Substrat und der Kapillare sind ferner keine zusätzlichen Verbindungselemente wie etwa Muffen oder O-Ringdichtungen vorgesehen, so dass dieses mikrofluidische System einen besonders einfachen, kompakten und leicht herstellbaren Aufbau aufweist. Ferner sind zur Herstellung dieser Verbindung keine äußeren Kräfte notwendig, durch die der Mikrofluidikchip oder an die Ein/Auslassöffnung angrenzende Bauteile oder Elemente des Systems beschädigt werden könnten. Schließich ist für die Verbindung zwischen dem Mikrofuidikchip und der Kapillare kein Klebstoff notwendig, bei dem die Gefahr einer Verstopfung der Kapillare oder des Kanals bestehen würde oder chemischer Reaktionen zwischen dem Klebstoff und einer mit der Kapillare geführten Flüssigkeit, wie etwa einer Reinigungsflüssigkeit oder eines Analyts, wie beispielsweise einer aggressiven Säure. Auch im Fall von HPLC-Messzellen, deren Reinigung und Kalibrierung typischerweise mit lösungsmittelhaltigen Stoffen durchgeführt wird, können keine Polymerverbindungen verwendet werden.

In einer Ausführungsform der Erfindung ist vorgesehen, dass das in die Ein/Auslassöffnung eingeführte Endstück der Kapillare mit der Innenwand der Ein/Auslassöffnung verschweißt ist. Alternativ zur Erfindung kann zum Herstellen einer entsprechenden Lötverbindung zwischen dem Substrat und der Kapillare ein Lot eingebracht werden, also beispielsweise in einen Zwischenraum zwischen dem in die Ein/Auslassöffnung eingeführten Endstück der Kapillare und der Innenwand der Ein/Auslassöffnung des Mikrofluidikchips. Es ist auch möglich, das Endstück der Kapillare, die Stirnfläche der Kapillare, die Innenfläche der Ein/Auslassöffnung der mindestens einen Substratschicht oder die an die Ein/Auslassöffnung angrenzende Außenfläche der (äußeren) Substratschicht mit einem Lot zu beschichten. Dabei kann das Lot aus einer Vielzahl unterschiedlicher Materialien ausgewählt werden. Es kommen hierfür insbesondere in Frage: Glaslote wie stabile Lötgläser (z.B. Blei-Silikat-Glaslot, Zink-Borat-Glaslot, Alkali-Phosphat-Glaslot), Komposit-Lötgläser, kristallisierende Lötgläser sowie reaktive Lötgläser oder aber Metalllote wie eutektische Lot (z.B. Blei-Zinn-Lot, Silber-Zinn-Lot, Gold-Zinn-Lot) sowie reaktives Lot.

Die Viskosität der genannten Lote kann durch eine entsprechend gewählte Erwärmung dieser Lote während des Fügeverfahrens (des Herstellungsverfahrens für die Verbindung zwischen Mikrofluidikchip und Kapillare) gezielt eingestellt werden, so dass insbesondere eine zu niedrige Viskosität mit der damit einhergehenden Gefahr eines Verstopfens der Kapillare oder des Kanals verhindert oder zumindest stark reduziert werden kann.

Schließlich hat eine Lötverbindung gegenüber einer Schweissverbindung zwischen Kapillare und Substrat, den Vorteil, dass je nach Schmelzpunkt des verwendeten Lotmaterials eine besonders geringe Erwärmung des Lots ausreichen kann zur Herstellung der Lotverbindung, so dass auf diese Weise an die Ein/Auslassöffnung angrenzende Bauteile oder (bioaktive) Beschichtungen des Mikrofluidchips besonders gut vor einer Überhitzung geschont werden können. Außerdem können mit einem Lot Maßabweichungen der Kapillare und/oder der Ein/Auslassöffnung besonders gut ausgeglichen werden.

Andererseits hat eine Schweissverbindung zwischen der Kapillare und dem Substrat, bei der das Endstück der Kapillare und/oder die Innenwand der Ein/Auslassöffnung durch Erwärmen angeschmolzen werden, den Vorteil, dass das Aufbringen eines Lotes (und damit auch die Gefahr eines Verstopfens der Kapillare oder der Ein/Auslassöffnung) entfällt und die Schweissverbindung somit in vielen Fällen leichter und schneller herstellbar ist als die hier alternativ beschriebene Lötverbindungen. Erfindungsgemäß werden die Kapillare und das Substrat mittels Diffusionsschweißen miteinander verschweißt. Dabei werden die Schmelzpunkte der Kapillare und/oder des Substrats beim Erwärmen nicht überschritten bzw. in zumindest einem der beiden Fügepartner keine schmelzflüssige Phase erzeugt, so dass einer der beiden Fügepartner oder beide Fügepartner nicht angeschmolzen wird bzw. werden. Dies schließt jedoch nicht eine plastische Verformbarkeit zumindest der Oberfläche dieses Fügepartners aus. Durch die Erwärmung der Fügepartner werden beim Diffusionsschweißen atomare Diffusionsprozesse in und zwischen den nach oder bei dem Erwärmen aufeinander gepressten Fügepartnern ausgelöst, welche zur Ausbildung der stoffschlüssigen Verbindung zwischen den Fügepartnern führen.

Durch die atomaren Diffusionsprozesse in den erwärmten Fügepartnern beim Diffusionsschweißen, also durch das Diffundieren von Atomen von einem Fügepartner in den anderen Fügepartner, bildet sich in einem oder in beiden Fügepartnern jeweils eine Diffusionszone aus, in der sich Atome des jeweiligen anderen Fügepartners einlagern. Innerhalb einer solchen Diffusionszone ändern sich durch den Einfluss der eingelagerten, diffundierten Atome die Materialeigenschaften des jeweiligen Fügepartners und können sich an die materialeigenschaften des jeweils anderen Fügepartners angleichen. So ist es beispielsweise möglich, dass sich auf diese Weise der thermische Ausdehnungskoeffizient des einen Fügepartners an den des anderen Fügepartners annähert. Hierdurch kann die Ausbildung mechanischer Spannungen zwischen beiden Fügepartnern beim anschließenden Abkühlen reduziert werden, so dass Rissbildungen und ein Aufbrechen der Verbindung beim Abkühlen vermieden werden kann.

Dies ermöglicht beispielsweise die Verbindung einer Kapillare mit einem Substrat aus voneinander verschiedenen Materialien, beispielsweise die Verbindung einer Kapillare aus Kieselglas mit einem Substrat bzw. einer Substratschicht aus Borosilikatglas.

Beispielsweise sind für das hier vorgeschlagene Verbinden von Kapillare und Substrat mittels Laserschweißen folgende Prozessparameter möglich: Schweißzeit vorzugsweise 2 bis 10 Sekunden, thermische Aktivierung der Kapillare vorzugsweise auf etwa das 0,5 bis 0,8-fache der Schmelztemperatur des Kapillarmaterials (für Kieselglas beträgt diese 1476K bzw. 1203°C, also Erwärmung einer Kieselglaskapillare auf etwa 738K bis 962,4K) und ein Anpressdruck vorzugsweise von 30 bis 150 MN/m². Ein Gaussdurchmesser des Laserstrahls beträgt vorzugsweise das 0,3 bis 1-fache des Kapillardurchmessers, der Laserstrahls ist vorzugsweise so ausgerichtet, dass der Laserstrahl möglichst flach zum Substrat verläuft, bezogen auf die Substratoberfläche also streifend verläuft. Vorzugsweise hat der Laserstrahl keine direkte oder nur eine periphere Wechselwirkung mit dem Substrat. Vorzugsweise wird die auf das Substrat aufgesetzte bzw. in die Ein/Auslassöffnung eingeführte Kapillare mit dem Laserstrahl bestrahlt an einem Einstrahlungsort in der Kapillare mit einem Abstand von der Substratoberfläche von etwa dem 1- bis 2-fachen Laserstrahldurchmesser. Eine Prozesskontrolle wird vorzugsweise mittels Pyrometrie durchgeführt.

Es kann ausreichen, ausschließlich oder hauptsächlich eine der beiden Fügepartner, also die Kapillare oder das Substrat, mit der verwendeten Wärmequelle, wie etwa dem Laser, zu erwärmen. Durch ein in Kontaktbringen der beiden Fügepartner kann (in Abhängigkeit von den aktuellen Temperaturen der Fügepartner und ihren Schmelztemperaturen) eine ausreichende Wärmemenge von dem stärker erwärmten Fügepartner auf den anderen Fügepartner, also beispielsweise von der Kapillare auf das Substrat bzw. die Substratschicht, übertragen werden. Im Fall, dass die Kapillare aus einem Material gefertigt ist, das eine höhere Schmelztemperatur aufweist als das Material des Substrats bzw. der Substratschicht, kann beispielsweise ausschließlich oder hauptsächlich die Kapillare mit der verwendeten Wärmequelle erwärmt werden.

Dabei kann ein für das Verlöten oder Verschweißen oder für eine andere stoffschlüssige Verbindungsform benötigter Wärmeeintrag (Erwärmung) mittels einer Laserbestrahlung mit einem Laser, beispielsweise einem CO₂-Laser, hergestellt werden sein. Auf diese Weise lässt sich der Wärmeeintrag (die Erwärmung) besonders gezielt durchführen und auf einen kleinen Raumbereich (etwa innerhalb eines Radius von einigen Hundert Mikrometern um die Ein/Auslassöffnung) begrenzen, so dass ein Überhitzen von an die Ein/Auslassöffnung angrenzender Bauelemente oder Beschichtungen vermieden werden kann. Insbesondere lässt sich die Stärke des Wärmeeintrags über eine Intensität des Lasers einstellen. Es ist auch möglich, mit einer gepulsten Laserbestrahlung ein derartiges Überhitzen zu verhindern. Außerdem ist es mit einem Laser besonders einfach möglich, nur bzw. hauptsächlichen einen der beiden Fügepartner, wie etwa die Kapillare oder das Substrat bzw. die Substratschicht, zu erwärmen, wie oben beschrieben.

Außerdem kann mit einem Laser die Ein/Auslassöffnung in dem Substrat hergestellt werden. So ist es beispielsweise möglich, dass ein mikrofluidischer Kanal in dem Substrat bereits vorliegt aber noch keine Ein/Auslassöffnung vorhanden ist, über welche die Kapillare mit dem Kanal verbunden werden kann. Dann kann das Substrat an der Stelle, an der die Kapillare mit dem Kanal verbunden werden soll, mit dem Laser bestrahlt werden und auf diese Weise die Ein/Auslassöffnung in das Substrat bis hin zum Kanal eingearbeitet werden. Dabei wird vorzugsweise ein Laserstrahl mit so großer Intensität verwendet, dass das Substratmaterial am Ort der Einstrahlung des Lasers verdampft und sich möglichst kein geschmolzenes Material am Substrat ablagern kann. Ferner ist es möglich, einen pulsierenden, rotierenden und/oder trepanierenden Laserstrahl zu verwenden.

Es werden zur Herstellung der Ein/Auslassöffnung mittels eines Lasers folgende Parameter bevorzugt. Die lokale Temperatur des Substrats an der entstehenden Ein/Auslassöffnung liegt vorzugsweise oberhalb der Sublimationstemperatur des Glases des Substrats der Gaussdurchmesser des Laserstrahls vorzugsweise liegt zwischen 20 µm bis 200 µm, die Pulsfrequenz des Laserstrahls liegt vorzugsweise zwischen 50Hz und 500Hz und die Pulsdauer liegt vorzugsweise jeweils zwischen 30 µs und 300 µs. Typischerweise können auf diese Weise im Fall von Borosilikatglas mit einer Dicke von bis zu 1 mm mit etwa 10 bis 100 Pulsen 1 mm Material abgetragen werden. Die Prozesskontrolle erfolgt vorzugsweise mittels Pyrometrie und Beobachtung des Plasmas.

Der Abtransport und die Kühlung der schmelzflüssigen Phase und des Plasmas an der entstehenden Ein/Auslassöffnung erfolgt vorzugsweise mittels einer angelegten Oberflächenströmung eines Medium entlang der Oberfläche des Substrats an der entstehenden Ein/Auslassöffnung, vorzugsweise von Luft. Dadurch kann eine Dicke einer Schmelzflusszone an der entstehenden Ein/Auslassöffnung und thermisch verursachte Spannungen reduziert werden. Außerdem können Zugspannungen an der fertiggestellten Ein/Auslassöffnung reduziert werden, indem eine silberhaltige Nitratschmelze in Kontakt mit der Ein/Auslassöffnung gebracht wird und auf diese Weise ein Eindiffundieren von Silberionen, in das Substrat an der Ein/Auslassöffnung ermöglich wird.

Direkt nach Herstellung der Ein/Auslassöffnung mittels des Lasers kann anschließend die Kapillare mit dem Substrat wie oben beschrieben stoffschlüssig verbunden werden zur Herstellung einer mikrofluidischen Verbindung zwischen der Kapillare und dem Kanal, beispielsweise durch stirnseitiges Verbinden oder durch Einführen der Kapillare in die Ein/Auslassöffnung.

Die Herstellung der Ein/Auslassöffnung mittels eines Lasers erlaubt ein hohes Maß an Flexibilität beim Herstellen der Verbindung der Kapillare mit dem Substrats insbesondere hinsichtlich des Zeitpunktes der Herstellung und der genauen Stelle der Verbindung.

Insbesondere kann derselbe Laser zur Herstellung der Ein/Auslassöffnung wie auch der formschlüssigen Verbindung zwischen Kapillare und Substrat verwendet werden. Dabei eignet sich der bereits genannte CO2-Laser besonders gut zur Erwärmung von Glasmaterialien, wie etwa der oben genannten Glasmaterialien.

In einer weiteren Ausführungsform ist vorgesehen, dass ein Fügebereich, der einen an das Endstück der Kapillare angrenzenden Bereich einer Außenwand der Kapillare und eine an die Innenwand der Ein/Auslassöffnung angrenzende Außenfläche des Mikrofluidikchips umfasst, mit einer durchgängigen Stabilisierungsschicht beschichtet ist. Diese Ausführungsform zeichnet sich durch eine besonders große mechanische Stabilität der stoffschlüssigen Verbindung zwischen der Kapillare und dem Mikrofluidikchip aus. Dabei ist es möglich, die genannte Stabilisierungsschicht durch Umgießen des Fügebereichs herzustellen, insbesondere mit einem Polymermaterial, welches beispielsweise Polyamide, Acrylate, Polyphthalamide, Epoxid, Polysulfone, Polyphenylensulfid, ungesättigte Polyester oder Polyurethan beinhalten kann.

Eine weitere Ausführungsform des hier vorgeschlagenen mikrofluidischen Systems sieht vor, dass eine Außenfläche der mit dem Mikrofluidikchip stoffschlüssig verbundenen Kapillare mit einer durchgängigen Polymerschicht beschichtet ist. Dabei kommen für diese Beschichtung der Kapillare (Coating oder Re-Coating der Kapillare) dieselben Polymermaterialien in Frage, welche auch für das Umgießen der Fügestelle verwendet werden können. Diese Beschichtung der Kapillare hat wiederum die Funktion einer Stabilisierung der Kapillare zur Erzielung einer großen mechanischen Stabilität (Bruchsicherheit) der Kapillare und der Verbindung zwischen dem Mikrofluidikchip und der Kapillare.

In einer weiteren Ausführungsform ist vorgesehen, dass die Kapillare oberhalb des in die Ein/Auslassöffnung eingeführten Endstücks gebogen ist. Eine solche Biegung oder Krümmung der Kapillare ist besonders leicht herstellbar bei einer Erwärmung der Kapillare bis zu einer plastischen Verformbarkeit des Kapillarmaterials während des Herstellens der hier vorgeschlagenen stoffschlüssigen Verbindung zwischen Kapillaren und dem Mikrofluidikchip, also während des Fügeverfahrens.

Mit Hilfe einer entsprechend gekrümmten Kapillare lassen sich viele verschiedene räumliche Anordnungen des Mikrofluidikchips relativ zur anderen Komponenten des mikrofluidischen Systems realisieren, wodurch eine große Flexibilität beim Aufbau des Systems erzielt wird. Ferner kann auf diese Weise ein Fan-Out benachbarter Kapillare erreicht werden, bei dem zwei oder mehr Kapillare, welche mit benachbarten Ein/Auslassöffnungen des Mikrofluidikchips verbunden sind, fächerförmig auseinanderlaufen. Ein derartiges Fan-Out erleichter also die Verbindung zwischen mikroskopischen Bauelementen und Kanälen auf dem Mikrofluidikchip mit anderen makroskopischen Elementen des mikrofluidischen Systems außerhalb des Mikrofluidikchips.

Die Ein/Auslassöffnung des mikrofluidischen Systems kann auf einer Oberseite oder einer Unterseite des Mikrofluidikchips als eine Durchtrittsöffnung in einer äußeren Substratschicht des Mikrofluidikchips ausgestaltet sein. Es ist aber auch möglich, dass die Ein/Auslassöffnung auf einer vorderen, hinteren oder seitlichen Stirnseite des Mikrofluidikchips als eine Öffnung in einer Seitenfläche einer Substratschicht des Mikrofluidikchips oder als eine Aussparung zwischen Substratschichten des Mikrofluidikchips ausgestaltet ist. Das hier vorgeschlagene mikrofluidische System zeichnet sich somit durch eine besonders große Flexibilität bezüglich verschiedener räumlicher Anordnungen der Verbindungen zwischen dem Mikrofluidikchip und der Kapillare aus. Somit ist es besonders einfach möglich, den Mikrofluidikchip mit anderen mikrofluidischen Komponenten des Systems zu verbinden, welche auf einer beliebigen Seite des Mikrofluidikchips angeordnet sein können. Diese Flexibilität wird weiter erhöht durch die oben beschriebene Biegung oder Krümmung der Kapillare, welche besonders leicht während der Erwärmung der Kapillare im Fügeprozess mit dem Substrat herstellbar ist.

In einer Weiterentwicklung ist vorgesehen, dass das Endstück der Kapillare konisch ausgeformt ist oder sich in einer anderen Form zum Ende der Kapillare hin verjüngt. Auf diese Weise lässt sich eine besonders gute Passgenauigkeit zwischen der Kapillare und der Ein/Auslassöffnung erzielen und eine größere Toleranz bezüglich Form- oder Maßabweichungen der Kapillare oder der Ein/Auslassöffnung erreichen. Beim Herstellen der Verbindung zwischen der Kapillare und dem Mikrofluidikchip wird die Kapillare in die Ein/Auslassöffnung bis zu einem Berührungskontakt zwischen der Außenfläche des Endstücks der Kapillare und der Innenwand der Ein/Auslassöffnung eingeschoben, also beispielsweise bis eine Querschnittsfläche der Kapillare eine Querschnittsfläche der Ein/Auslassöffnung übersteigt.

Zum selben Zweck kann vorgesehen sein, dass die Ein/Auslassöffnung konisch ausgeformt ist oder sich auf eine andere Weise zum Inneren des Mikrofluidikchips hin verjüngt. Durch die somit erreichbare hohe Passgenauigkeit zwischen Kapillare und der Ein/Auslassöffnung lässt sich eine besonders zuverlässige und stabile Verbindung zwischen Kapillare und Ein/Auslassöffnung mit einem besonders geringen Totvolumen herstellen.

Außerdem ist es möglich, einen Innendruck der erwärmten und mit ihrem Endstück in die Ein/Auslassöffnung eingeführten Kapillare so weit zu erhöhen, dass sich das Endstück aufgrund dieses erhöhten Innendrucks aufweitet, sich also ein Außendurchmesser der Kapillare vergrößert, und sich das Endstück an die Innenwand der Ein/Auslassöffnung anformt zur Herstellung einer möglichst großen Kontaktfläche zwischen dem Endstück und der Innenfläche der Ein/Auslassöffnung. Beispielsweise kann zu diesem Zweck ein Medium wie etwa Luft in der Kapillare auf einen Überdruck gegenüber der Atmosphäre von beispielsweise 0,5 bar bis 2 bar gebracht werden.

Es kann auch vorgesehen sein, dass eine Endfläche des Endstücks der Kapillare abgeschrägt ist. Eine solche abgeschrägte Kapillare eignet sich besonders gut zum Herstellen einer Verbindung zwischen der Kapillare und dem Mikrofluidikchip, bei dem die Kapillare schräg aus der Ein/Auslassöffnung herausläuft bzw. in diese hineinläuft, insbesondere zum Erzielen eines Fan-Outs. Durch die entsprechende Abschrägung der Endfläche der Kapillare ist eine besonders große Kontaktfläche zwischen der Kapillare und der Innenwand der Ein/Auslassöffnung erzielbar für eine sichere und stabile Verbindung zwischen Kapillare und dem Mikrofluidikchip.

In einer Weiterentwicklung ist vorgesehen, dass die Innenwand (Innenwandung) der Ein/Auslassöffnung einen Anschlag für das Endstück der Kapillare aufweist. Ein solcher Anschlag eignet sich zum einen zum Herstellen einer besonders großen Kontaktfläche zwischen der Kapillare und der Innenwand der Ein/Auslassöffnung. Zum anderen lässt sich die Toleranz gegenüber Formabweichungen auf diese Weise weiter erhöhen, da sich auf diese Weise insbesondere bei Kapillaren mit einer zu kleinen Querschnittsfläche oder bei Ein/Austrittsöffnungen mit einer zu großen Querschnittsfläche eine ausreichende Kontaktfläche zwischen der Kapillare und der Innenwand der Ein/Auslassöffnung erzielen lässt.

In dem erfindungsgemäßen Herstellungsverfahren für ein mikrofluidisches System mit einem Mikrofluidikchip und einer Kapillare ist vorgesehen, dass ein Endstück der Kapillare in eine Ein/Auslassöffnung des Mikrofluidikchips eingeführt und die Kapillare mit dem Mikrofluidikchip stoffschlüssig verbunden wird. Dabei wird das in die Ein/Auslassöffnung eingeführte Endstück der Kapillare mit einer Innenwandung (Innenwand) der Ein/Auslassöffnung, welche durch Teilbereiche eines mindestens eine Substratschicht umfassenden Substrats des Mikrofluidikchips gegeben ist, durch Erwärmen stoffschlüssig verbunden.

Dieses Verfahren hat gegenüber den im Stand der Technik bekannten Verfahren den Vorteil, dass es besonders leicht und kostengünstig durchführbar ist und sich mit ihm druckfeste und kompakte Verbindungen zwischen dem Mikrofluidikchip und der Kapillare mit nur einem geringen Totvolumen herstellen lassen.

Ein für das Erwärmen des Mikrofluidikchips und der Kapillare benötigter Wärmeeintrag wird im erfindungsgemäßen Herstellungsverfahren mittels Laserbestrahlung, beispielsweise mit einem CO₂-Laser, erzeugt. Ferner kann vorgesehen sein, dass auf diese Weise das in die Ein/Auslassöffnung eingeführte Endstück der Kapillare mit der Innenwand der Ein/Auslassöffnung verlötet oder verschweißt wird. Durch das Erwärmen mittels eines Lasers lässt sich vorteilhafterweise ein erwärmter Bereich des Mikrofluidikchips räumlich begrenzen zur Schonung an die Ein/Auslassöffnung angrenzender Bauteile vor einer Überhitzung. Für einen räumlich besonders homogenen Wärmeeintrag kann außerdem vorgesehen sein, dass die Kapillare und/oder das Substrat von zwei oder mehr verschiedenen Seiten mit Laserstrahlung bestrahlt wird bzw. werden. Hierzu können zwei oder mehr unterschiedlich positionierte Laser verwendet werden. Es ist aber auch möglich, die Laserstrahlung eines einzelnen Lasers mittels einer Umlenkvorrichtung so umzulenken, dass sie, beispielsweise zeitlich abwechselnd, von den verschiedenen Seiten auf die Kapillare und/oder das Substrat auftrifft. Zu diesem Zweck kann die Umlenkvorrichtung mindestens einen, vorzugsweise zwei Umlenkspiegel aufweisen, die in ihrer Ausrichtung, beispielsweise mittels eines Motors und einer entsprechend eingerichteten Kontrolleinheit, einstellbar und/oder oszillierbar sind zum Ausrichten des Laserstrahls auf das Substrat und/oder die Kapillare.

Zur Herstellung einer Lötverbindung zwischen der Kapillare und dem Mikrofluidikchip wird in einen Zwischenraum zwischen dem in die Ein/Auslassöffnung eingeführten Endstück der Kapillare und der Innenwand der Ein/Auslassöffnung ein Lot, insbesondere ein Glaslot oder ein anderes der weiter oben genannten Lote, eingebracht. Dieses kann durch einen geeigneten Wärmeeintrag bis zu einer vorgegebenen Viskosität verflüssigt werden, wobei die Viskosität so eingestellt wird, dass das Lot das Endstück bzw. die Innenwand ausreichend benetzt, aber ein Eindringen des Lots in die Kapillare oder in den Kanal hinein verhindert wird. Ebenso kann auf diese Weise ein Verstopfen der Ein/Auslassöffnung durch das Lot verhindert werden.

In einer Ausführungsform des Herstellungsverfahrens wird die Erwärmung der Kapillare dazu ausgenutzt, die Kapillare in bis zur einer vorgegebenen Krümmung der Kapillare zu verformen. Zu diesem Zweck wird die Kapillare bis zu einer plastischen Verformbarkeit der Kapillare erwärmt und anschließen bis zum Erreichen einer gewünschten Krümmung der Kapillare verformt. Es ist aber auch möglich, die Kapillare bereits vor Herstellen der Verbindung mit dem Substrat zu Verformen oder auch danach. Außerdem kann vorgesehen sein, dass beim Verformen oder Verbiegen der Kapillare innerhalb der Kapillare ein erhöhter Druck angelegt wird, um ein Kollabieren der Kapillare zu verhindern. Hierfür kann der Druck eines Mediums innerhalb der Kapillare, wie etwa Luft, auf einen Überdruck von etwa 0,3 bis 2 bar gegenüber der äußeren Atmosphäre gebracht werden. Insbesondere kann der Druck innerhalb der Kapillare während der Umformung der Kapillare sukzessive erhöht werden. Auf diese Weise wird durch das Umformen der Kapillare eine Biegung der Kapillare mit einem Krümmungsradius kleiner als der dreifache Außendurchmesser der Kapillare erzeugt, vorzugsweise weniger als der einfache Außendurchmesser der Kapillare, wobei der Krümmungsradius entlang der Außenfläche der Kapillare entlang des Längsverlaufs der Kapillare entlang der äußeren Krümmung der Biegung der Kapillare gemessen wird.

Zur Herstellung einer besonders stabilen Verbindung zwischen der Kapillare mit dem Mikrofluidikchip kann vorgesehen sein, dass ein Fügebereich, der einen an das Endstück der Kapillare angrenzenden Bereich eine Außenwand der Kapillare und eine an die Innenwand der Ein/Auslassöffnung angrenzende Außenfläche des Mikrofluidikchips umfasst, mit einer durchgängigen Stabilisierungsschicht beschichtet wird. Auf diese Weise lässt sich eine mechanisch besonders stabile Verbindung zwischen der Kapillare und dem Mikrofluidikchip herstellen. Dabei ist es möglich, die genannte Stabilisierungsschicht und ein Umgießen des Fügebereichs mit einem Polymermaterial hergestellt wird. Insbesondere ist es möglich, dass auch eine Außenfläche der mit dem Mikrofluidikchip stoffschlüssig verbundenen Kapillare mit einer durchgängigen Polymerschicht beschichtet wird, so dass die Kapillare mechanisch stabilisiert wird. Als Materialien für die Polymerschicht kommen die oben genannten Polymermaterialien in Frage.

Es kann vorgesehen sein, dass die Ein/Auslassöffnung auf einer Oberseite oder auf einer Unterseite des Mikrofluidikchips als eine Durchgangsöffnung in einer äußeren Substratschicht des Mikrofluidikchips hergestellt wird. Genauso gut ist es möglich, dass die Ein/Auslassöffnung auf einer Stirnseite des Mikrofluidikchips als eine Durchgangsöffnung in einer Seitenfläche einer Substratschicht des Mikrofluidikchips oder als eine Aussparung zwischen Substratschichten des Mikrofluidikchips hergestellt wird. Dabei wird die Seite des Mikrofluidikchips, auf der die Ein/Auslassöffnung angeordnet wird, so gewählt, dass eine besonders günstige räumliche Anordnung des Mikrofluidikchips und einer weiteren Komponenten des mikrofluidischen Systems, insbesondere einer Pumpe, einem Ventilsystem oder eines Filters, ermöglicht wird. Zu diesem Zweck kann auch, wie bereits oben beschrieben, die Kapillare entsprechend dieser Anordnung gebogen werden. Eine derartige plastische Verformung der Kapillare lässt sich vorzugsweise dann herstellen, wenn sie während des Fügeverfahrens mit dem Mikrofluidikchip erwärmt wird und dabei eine plastische Verformbarkeit der Kapillare erreicht wird.

In einer Weiterentwicklung ist vorgesehen, dass an der Innenwand der Ein/Auslassöffnung ein Anschlag für das Endstück der Kapillare ausgebildet wird. Dies kann besonders einfach dadurch erreicht werden, dass das Substrat des Mikrofluidikchips in einer Stapeltechnik aus mehreren Substratschichten hergestellt wird, wobei mindestens eine der Substratschichten in die Ein/Auslassöffnung hineinragt und auf diese Weise der Anschlag gebildet wird.

Im Folgenden wird die Erfindung anhand von in Figuren 1 bis 10 gezeigten verschiedenen speziellen Ausführungsformen von erfindungsgemäßen wie auch von alternativen mikrofluidischen Systemen und entsprechenden Herstellungsverfahren näher erläutert. Es zeigt:
- Fig. 1.: einen Mikrofluidikchip mit mehreren Ein/Auslassöffnungen an einer Oberseite und einer Stirnseite des Mikrofluidikchips, wobei in die Ein/Auslassöffnungen jeweils eine Kapillare eingeführt ist;
- Fig. 2.: den in Figur 1 gezeigte Mikrofluidikchip, nachdem die Kapillaren mit dem Mikrofluidikchip verschweißt oder verlötet worden sind;
- Fig. 3.: einen Mikrofluidikchip mit zwei Ein/Auslassöffnungen, in die bis zu Anschlägen der Ein/Auslassöffnungen jeweils eine Kapillare eingeführt ist;
- Fig. 4.: den in Figur 3 gezeigte Mikrofluidikchip, nachdem die Kapillaren mit dem Mikrofluidikchip verschweißt worden sind;
- Fig. 5.: einen Mikrofluidikchip mit einer bioaktiven Beschichtung und mit einer konisch zulaufenden Ein/Auslassöffnung an einer Stirnseite des Mikrofluidikchips, in die eine Kapillare eingeführt ist;
- Fig. 6.: den in Figur 5 gezeigte Mikrofluidikchip, nachdem die Kapillare mit dem Mikrofluidikchip verlötet worden ist;
- Fig. 7.: einen Mikrofluidikchip mit einer konisch zulaufenden Ein/Auslassöffnung an einer Stirnseite des Mikrofluidikchips, in die ein konisches Endstück einer beschichteten Kapillare eingeführt ist;
- Fig. 8.: den in Figur 7 gezeigte Mikrofluidikchip, nachdem die Kapillare mit dem Mikrofluidikchip verschweißt worden ist;
- Fig. 9.: einen Mikrofluidikchip mit zwei Ein/Auslassöffnungen an einer Stirnseite des Mikrofluidikchips, in die jeweils bis zu Anschlägen eine Kapillare eingeführt ist;
- Fig. 10.: den in Figur 9 gezeigte Mikrofluidikchip, nachdem die Kapillare mit dem Mikrofluidikchip verschweißt und beschichtet worden sind; und
- Fig. 11.: einen Mikrofluidikchip hier vorgeschlagener Art mit zwei Ein/Auslassöffnungen, mit denen jeweils eine Kapillare mit einer Stirnfläche verschweißt oder verlötet ist.

Wiederkehrende Bezugszeichen bezeichnen dabei gleiche Merkmale, siehe untenstehende Bezugszeichenliste.

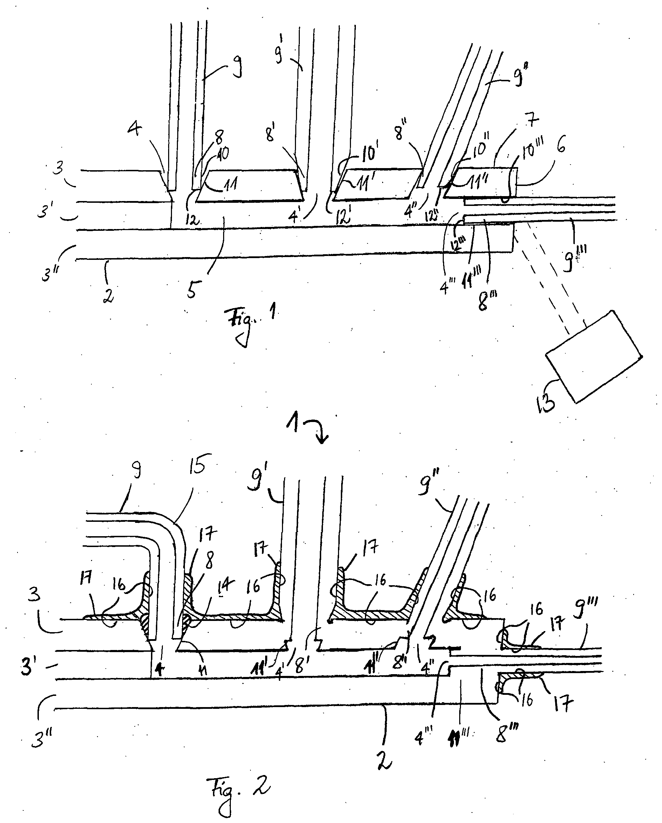

In Fign. 1 und 2 wird eine Ausführungsform eines Herstellungsverfahrens für ein mikrofluidisches System 1 hier vorgeschlagener Art schematisch dargestellt. Fig. 1 zeigt einen Mikrofluidikchip 2, der ein obere, eine mittlere und eine untere Substratschicht 3, 3' und 3" umfasst. Diese drei Substratschichten 3, 3' und 3" sind aus Kieselglas gefertigt und in einer Stapeltechnik übereinander gestapelt. In die obere Substratschicht 3 sind drei Ein/Auslassöffnungen 4, 4' und 4" als Durchgangslöcher in die obere Substratschicht 3 eingearbeitet. Zwischen der oberen Substratschicht 3 und der unteren Substratschicht 3" des Mikrofluidikchips 2 ist ein mikrofluidischer Kanal 5 vorgesehen, der mit den drei Ein/Auslassöffnungen 4, 4' und 4" verbunden ist und dessen Breite von etwa 100 Mikrometern durch die Dicke der mittleren Substratschicht 3' des Mikrofluidikchips 2 gegeben ist.

Der Kanal 5 mündet in eine vierte Auslassöffnung 4''' an einer Stirnseite 6 des Mikrofluidikchips 2. Somit umfasst der Mikrofluidikchip vier Auslassöffnungen, von denen drei an einer Oberseite 7 des Mikrofluidikchips 2 (4, 4', 4") und eine Ein/Auslassöffnung 4''' an der Stirnseite 6 des Mikrofluidikchips 2 angeordnet sind.

In die genannten Ein/Auslassöffnungen 4, 4', 4", 4''' ist jeweils ein Endstück 8, 8', 8", 8''' einer Kapillare 9, 9', 9", 9''' eingeführt, wobei die Kapillaren 9, 9', 9", 9''' jeweils einen Durchmesser von etwa 100 Mikrometern aufweisen. Dabei sind die genannten Endstücke 8, 8', 8", 8''' so weit in die jeweiligen Ein/Auslassöffnungen 4, 4', 4", 4''' eingeführt, dass ein Berührungskontakt zwischen Außenflächen 10, 10', 10", 10''' der jeweiligen Endstücke 8, 8', 8", 8''' und Innenwänden 11, 11', 11", 11''' der Ein/Auslassöffnungen 4, 4', 4", 4''' hergestellt ist. Zur Vereinfachung der Herstellung dieses Berührungskontaktes sind zwei der Ein/Auslassöffnungen 4, 4' an der Oberseite 7 konisch ausgeformt, d.h. diese Ein/Auslassöffnungen 4, 4' verjüngen sich zum Kanal 5 hin. Außerdem sind zum selben Zweck die Endstücke 8', 8" zweier Kapillare 9', 9" ebenfalls konisch ausgeformt, so dass diese sich zu Enden der Kapillare 9', 9" hin verjüngen. Auf diese Weise lassen sich Formabweichungen der genannten Ein/Auslassöffnungen oder der Kapillare besonders einfach und sicher ausgleichen.

Eine der Ein/Auslassöffnungen 4" auf der Oberseite 7 des Mikrofluidikchips 2 ist schräg in die obere Substratschicht 3 des Mikrofluidikchips 2 eingearbeitet, so dass die zugehörige Kapillare 9" entsprechend schräg in diese Ein/Auslassöffnung 4" eingeführt ist. Zur Erzielung einer dichten und stabilen Verbindung zwischen der Ein/Auslassöffnungen 4" und dieser Kapillare 9" ist ferner eine Endfläche 12" dieser Kapillare abgeschrägt ausgestaltet.

Auf diese Weise lässt sich ein Fan-Out, also eine fächerförmig auseinander laufende Anordnung der Kapillaren 9, 9', 9", 9''' erzielen. Ein solches Fan-Out ermöglicht eine große räumliche Nähe zwischen den genannten Ein/Auslassöffnungen auf dem Mikrofluidikchip und somit eine große funktionale Integrität des Mikrofluidikchips 2.

Die Kapillaren 9, 9', 9" und 9''' werden mit dem Mikrofluidikchip 10 durch Erwärmen mit einem Laser 13, der in diesem Beispiel durch einen CO₂-Laser gegeben ist, stoffschlüssig verbunden.

Fig. 2 zeigt den in Fig. 1 dargestellten Mikrofluidikchip 2 nach der Herstellung der stoffschlüssigen Verbindungen zwischen den Kapillaren 9, 9', 9", 9''' und dem Mikrofluidikchip 2. Drei dieser Kapillaren 9', 9", 9''' wurden mit dem Mikrofluidikchip verschweißt. Zu diesem Zweck wurden die zugehörigen Endstücke 8', 8", 8''' sowie die Innenwände 11', 11", 11''' der Ein/Auslassöffnungen 4', 4", 4''' bis zu einem Schmelzpunkt des Substratmaterials und des Kapillarmaterials (jeweils Kieselglas) mit dem Laser 13 erhitzt, so dass die Kapillaren 9', 9", 9''' mit dem Mikrofluidikchip 2 jeweils durch Bildung eines Glas-Glas-Verbunds miteinander verschweißt worden sind.

Dahingegen wurde eine der Kapillaren 9 mit dem Mikrofluidikchip 2 verlötet. Zu diesem Zweck wurde ein Blei-Silikat-Glaslot 14 zwischen das Endstück 8 der Kapillare 9 und der Innenwand 11 der Ein/Auslassöffnung 4 eingebracht und mit dem Laser 13 bis zu einem Schmelzpunkt des Glaslots 14 erhitzt. Außerdem wurde diese Kapillare 9 oberhalb des Endstücks 8 mit dem Laser 13 bis zu einer Verformbarkeit der Kapillare 9 erwärmt und die Kapillare 9 in einem Abschnitt 15 der Kapillare 9 um einen Winkel von etwa 90° von den anderen Kapillaren weggebogen zum Erzeugen eines Fan-Outs.

Anschließend wurde auf Fügebereichen 16 eine durchgängige Stabilisierungsschicht 17 aufgetragen für eine mechanische Stabilisierung der stoffschlüssigen Verbindungen zwischen den Kapillaren 9, 9', 9", 9''' und dem Mikrofluidikchip 2. Dabei umfassen die Fügebereiche 16 einen aus der jeweiligen Ein/Auslassöffnung 4, 4', 4", 4''' herausragenden Außenwandbereich der Kapillare 9, 9', 9", 9''' und eine an die Ein/Auslassöffnung 4, 4', 4", 4''' angrenzende Außenfläche des Mikrofluidikchips.

Die Kapillaren 9, 9', 9", 9''' und der Kanal 5 können beispielsweise mit Kohlenstoffdisulfid gefüllt und somit als Lichtwellenleiter ausgestaltet sein. Insbesondere eignet sich das der mikrofluidische System dann zum Detektieren oder Aussenden optischer Signale (Out-of-the-plane-Detection). Alternativ ist es mit den hier beschriebenen Verfahren auch möglich, anstelle von Kapillaren Glasfasern mit dem Mikrofluidikchip zu verlöten oder zu verschweißen.

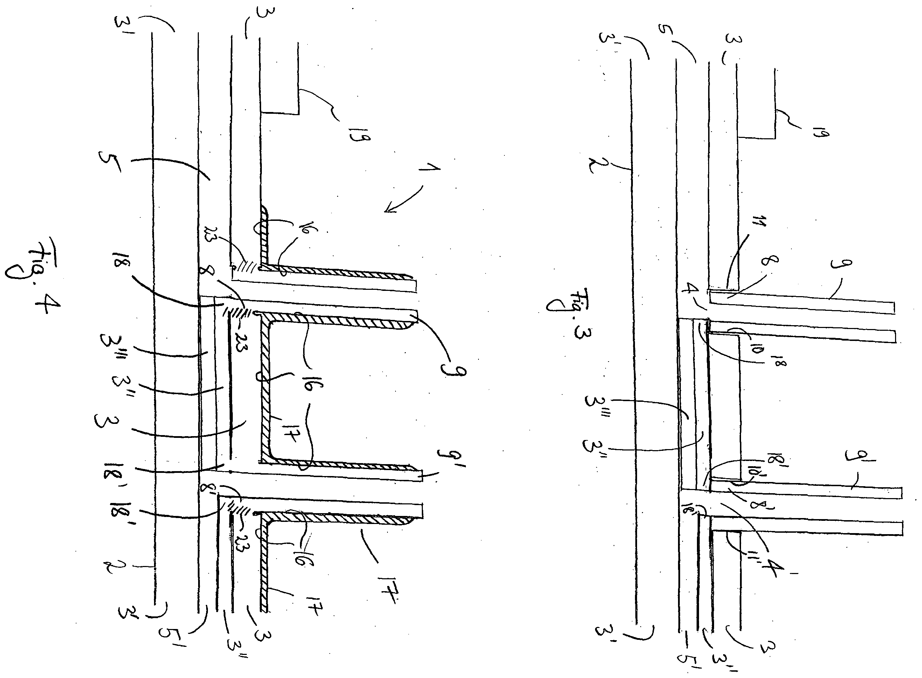

In den Fign. 3 und 4 ist eine weitere Ausführungsform des hier vorgeschlagenen Herstellungsverfahrens für ein mikrofluidisches System 1 hier vorgeschlagener Art schematisch dargestellt. In einer oberen durch dotiertes Silizium gegebenen Substratschicht 3 des Mikrofluidikchips 2 sind zwei Ein/Auslassöffnungen 4, 4' mittels eines Ätzverfahrens als Durchtrittsöffnungen eingearbeitet. Zwischen dieser oberen Substratschicht 3 und einer unteren durch reines Silizium gegebene Substratschicht 3' des Mikrofluidikchips 2 sind zwei mikrofluidische Kanäle 5 und 5' mit Breiten von 100 Mikrometern bzw. 50 Mikrometern vorgesehen, welche durch zwei weitere Substratschichten 3" und 3''' (reines Silizium) voneinander getrennt werden, wobei die beiden letztgenannten Substratschichten 3" und 3''' zwischen der oberen und der unteren Substratschicht 3 und 3' angeordnet sind.

Außerdem sind durch die direkt unterhalb der oberen Substratschicht angeordnete Substratschicht 3" ein- bzw. zweiseitige Anschläge 18 und 18' ausgeformt.

In die genannten Ein/Auslassöffnungen 4 und 4' in der obersten Substratschicht 3 sind zwei Kapillaren 9 und 9' mit Endstücken 8 und 8' bis zu diesen Anschlägen 18 und 18' eingeführt. Die Kapillare 9 und 9' weisen jeweils einen Durchmesser von etwa 100 µm auf.

In einem Abstand von etwa 300 µm von der linken Kapillaren 9 ist ein optoelektronisches Bauteil 19 auf der obersten Substratschicht 3 des Mikrofluidikchips 2 angeordnet. Wie im vorangehenden Beispiel werden auch hier die beiden Endstücke 8 und 8' der Kapillare 9 und 9' sowie die oberste Substratschicht an den Ein/Auslassöffnungen 4 und 4', d.h. an den Innenwänden 11 und 11' dieser Ein/Auslassöffnungen 4 und 4' mit einem Laser (hier nicht dargestellt) bis zu einem Schmelzpunkt erwärmt. Außerdem werden auch die von der direkt unterhalb der obersten Substratschicht 3 angeordneten Substrat 3" ausgebildeten Anschläge 18 und 18' bis zu einem Schmelzpunkt erwärmt. Auf diese Weise werden die Endstücke 8 und 8' der Kapillaren 9 und 9' mit der Substratschicht 3 und der darunter liegenden Substratschicht 3" verschweißt durch Bildung von entsprechenden Silizium-Glas-Verbünden 23. Dabei wird der Laser in einem Pulsbetrieb verwendet zur gezielten Einstellung einer zum Herstellen eines Silizium-Glas-Verbunds 23 benötigten Temperatur.

Anschließend wird, wie im vorangehenden Beispiel, ein Fügebereich 16 mit einer Stabilisierungsschicht 17 beschichtet, wobei diese Stabilisierungsschicht 17 durchgängig ausgestaltet ist die Kapillaren 9 und 9' möglichst großflächig abdeckt. Auf diese Weise wird eine besonders gute mechanische Stabilisierung der Verbindungen zwischen dem Mikrofluidikchip 2 und den Kapillaren 9 und 9' erreicht. Außerdem werden auch die Kapillare 9 und 9' mechanisch stabilisiert.

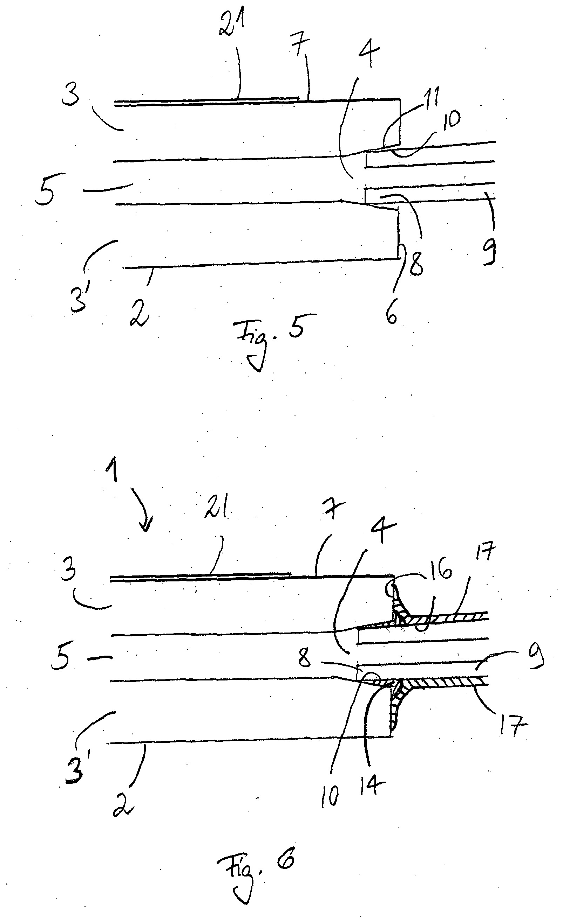

In den Fign. 5 und 6 wird ein Ausführungsbeispiel eines alternativen mikrofluidischen Systems 1 schematisch dargestellt. Dabei umfasst ein Mikrofluidikchip 2 des mikrofluidischen Systems zwei Substratschichten 3 und 3' aus Aluminiumoxid, zwischen denen ein mikrofluidischer Kanal 5 mit einer Breite von etwa 50 µm vorgesehen ist. Dabei kann dieser Kanal 5 dadurch hergestellt sein, dass der Kanal 5 in eine Oberfläche der Substratschicht 3' eingearbeitet und von der Substratschicht 3 abgedeckt ist. Es kann aber auch vorgesehen sein, dass die beiden Substratschichten 3 und 3' voneinander beabstandet angeordnet sind zur Ausbildung des Kanals 5.

Der Kanal 5 mündet in eine Ein/Auslassöffnung 4 des Mikrofluidikchips 2, welcher an einer Stirnseite 6 des Mikrofluidikchips zwischen den beiden Substratschichten 3 und 3' angeordnet ist. Diese Ein/Auslassöffnung 4 ist konisch ausgestaltet und verjüngt sich von der Stirnseite 6 zum Kanal 5 hin.

In diese Ein/Auslassöffnung 4 ist ein Endstück 8 einer Kapillare 9 eingeführt bis zu einem Berührungskontakt zwischen einer Innenwand 11 der Ein/Auslasöffnung 4 und einer Außenfläche 10 des Endstücks 8 der Kapillare 9. Die Kapillare 9 weist einen Durchmesser von etwa 50 µm auf. In einem Abstand von etwa 100 µm von der Ein/Auslassöffnung 4 ist auf einer Oberseite 7 auf der oberen Substratschicht 3 eine bioaktive Beschichtung 21 aufgetragen.

Nach dem Einführen des Endstücks 8 der Kapillare 9 in die Ein/Auslassöffnung 4 auf der Stirnseite 6 des Mikrofluidikchips 2 wird ein eutektisches Blei-Zinn-Lot 14 in einen Zwischenraum zwischen der Außenfläche 10 des Endstücks 8 der Kapillare 9 und der Innenwand 11 der Ein/Auslassöffnung 4 eingebracht und mittels eines Lasers (hier nicht dargestellt) bis zu einem Schmelzen des Lots 14 erwärmt. Auf diese Weise wird die Kapillare 9 mit dem Mikrofluidikchip 2 verlötet. Durch die stark lokalisierte Erwärmung des Endstücks der Kapillare 9 und der Ein/Auslassöffnung 4 mit einem großen Temperaturgradienten bleibt die bioaktive Beschichtung 21 jedoch intakt.

Anschließend wird auf einem Fügebereich 16 eine durchgängige Stabilisierungsschicht 17 aus einem Epoxid aufgetragen.

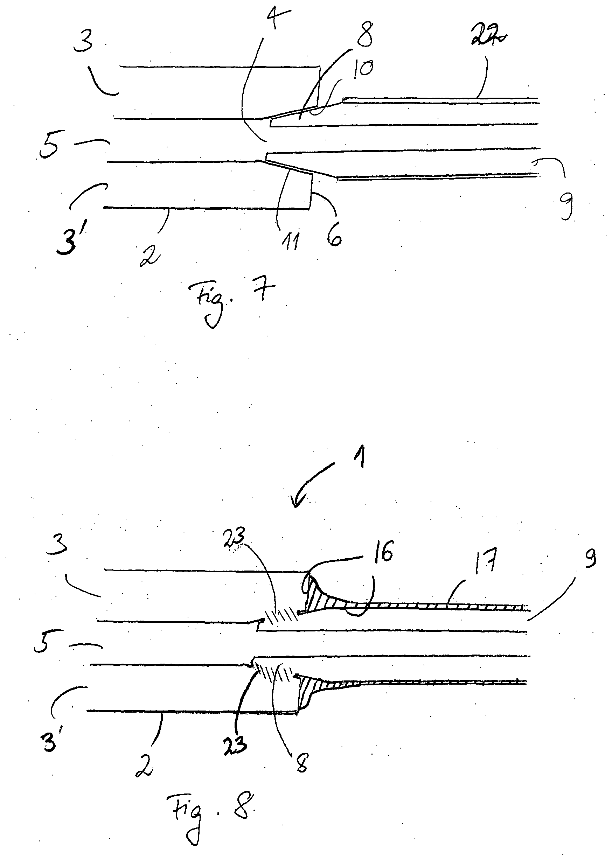

In den Fign. 7 und 8 wird ein weiteres Ausführungsbeispiel eines mikrofluidischen Systems 1 hier vorgeschlagener Art schematisch dargestellt. Im Unterschied zu dem anhand von Figuren 5 und 6 beschriebenen Beispiel sind die beiden Substratschichten 3 und 3' des Mikrofluidikchips 2 aus einem Polymermaterial (Plexiglas) gefertigt, zwischen denen ein mikrofluidischer Kanal 5 mit einer Breite von etwa 20 µm vorgesehen ist. Dabei ist dieser Kanal 5 in eine Oberfläche der Substratschicht 3' mittel eines Nanoprägelithgrafieverfahrens eingearbeitet und von der Substratschicht 3 abgedeckt.

Der Kanal 5 mündet in eine Ein/Auslassöffnung 4 des Mikrofluidikchips 2, welcher an einer Stirnseite 6 des Mikrofluidikchips zwischen den beiden Substratschichten 3 und 3' angeordnet ist. Diese Ein/Auslassöffnung 4 ist konisch ausgestaltet und verjüngt sich von der Stirnseite 6 zum Kanal 5 hin. In diese Ein/Auslassöffnung 4 ist ein konisch zulaufendes Endstück 8 einer gläsernen Kapillare 9 eingeführt bis zu einem Berührungskontakt zwischen einer Innenwand 11 der Ein/Auslassöffnung 4 und einer Außenfläche 10 des Endstücks 8 der Kapillare 9.

Die Kapillare 9 weist einen Durchmesser von etwa 50 µm auf und ist zur Stabilisierung oberhalb des Endstücks 8 mit einer Beschichtung 22 aus einem Polyamid versehen.

Nach dem Einführen des Endstücks 8 der Kapillare 9 in die Ein/Auslassöffnung 4 auf der Stirnseite 6 des Mikrofluidikchips 2 wird die Kapillare 9 mit dem Mikrofluidikchip 2 mit einem Laser verschweißt und auf diese Weise ein Polymer-Glas-Verbund 23 gebildet. Anschließend wird auf einem Fügebereich 16 eine durchgängige Stabilisierungsschicht 17 aus einem Polyamid aufgetragen, welche sich mit der Beschichtung 22 der Kapillare 9 verbindet.

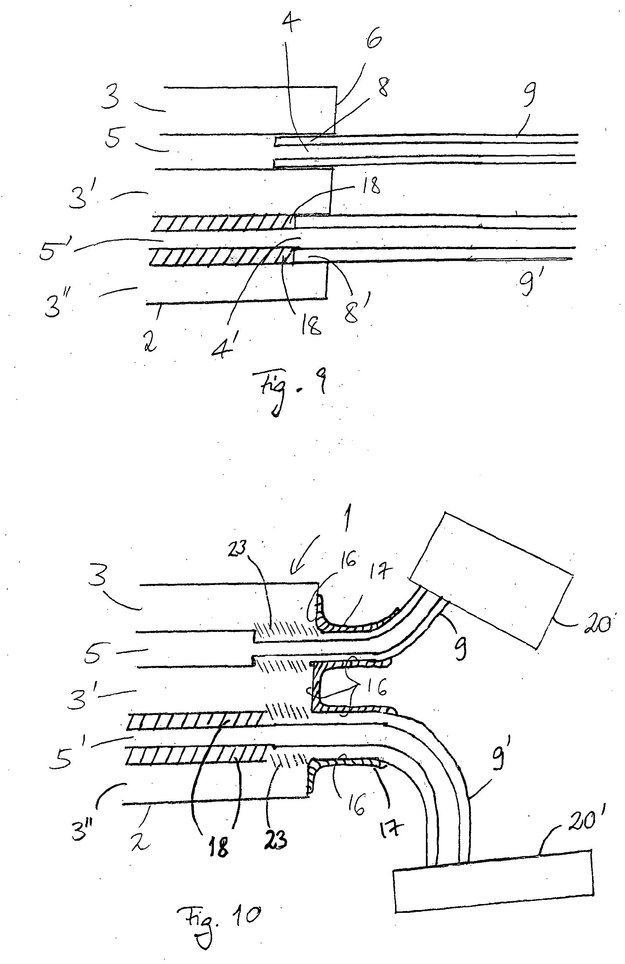

In den Fign. 9 und 10 wird ein weiteres Ausführungsbeispiel eines mikrofluidischen Systems 1 hier vorgeschlagener Art schematisch dargestellt. Der Mikrofluidikchip 2 umfasst drei gestapelte Substratschichten 3, 3' und 3" aus einem Polymermaterial (Plexiglas), zwischen denen zwei mikrofluidische Kanäle 5, 5' mit einer Breite von etwa 10 µm bzw. 20 µm vorgesehen sind.

Der Kanäle münden in Ein/Auslassöffnungen 4, 4' des Mikrofluidikchips 2, welche an einer Stirnseite 6 des Mikrofluidikchips angeordnet sind. In diese Ein/Auslassöffnungen 4 und 4' ist jeweils ein Endstück 8 einer Kapillare 9 aus einem Polymermaterial (Plexiglas) eingeführt. In dem unteren der beiden Kanäle sind zwei weitere Substratschichten aus Plexiglas angeordnet, die jeweils einen Anschlag 18 für das Endstück 8' der Kapillare 9' ausbilden.

Die beiden Kapillare 9, 9' weisen jeweils einen Durchmesser von etwa 20 µm auf.

Nach dem Einführen der Endstücke 8 und 8' der Kapillare 9 und 9' in die Ein/Auslassöffnungen 4 und 4' werden Endstücke 8 und 8' der Kapillare 9 und 9' in mit den Ein/Auslassöffnungen 4 und 4' des Mikrofluidikchips 2 durch Bestrahlung mit einem Laser (hier nicht dargestellt) unter Bildung eines Polymer-Polymer-Verbunds 23 verschweißt. Gleichzeitig werden die beiden erwärmten Kapillare 9 und 9' oberhalb der Endstücke 8 und 8' auseinander gebogen zur Erzielung eines bleibenden Fan-Outs. Auf diese Weise können die beiden Kapillare jeweils an eine fest vorgegebene Anordnung von zwei Pumpen 20, 20' des mikrofluidischen Systems 1 angeschlossen werden wie in Figur 10 dargestellt.

Wie bereits erwähnt werden durch das Verschweißen der Kapillaren 9, 9' mit den Substratschichten 3, 3' und 3'' sowie mit den Anschlägen 18 Polymer-Polymer-Verbünde 23 gebildet (schraffiert dargestellt). Entsprechende Materialverbünde werden auch in den vorangehenden Beispielen gebildet, in denen die Kapillare 9, 9', 9" mit Substratschichten 3, 3', 3'' und ggf. Anschlägen 18, 18' des Mikrofluidikchips 2 verschweißt werden, vgl. etwa Figur 8, mit einem entsprechend schraffiert dargestellten Polymer-Glas-Verbund 23, in Figur 4 mit einem Silizium-Glas-Verbund 23. In dem in Figur 2 gezeigten Beispiel sind entsprechende Glas-Glas-Verbünde der Übersichtlichkeit halber nicht eingezeichnet.

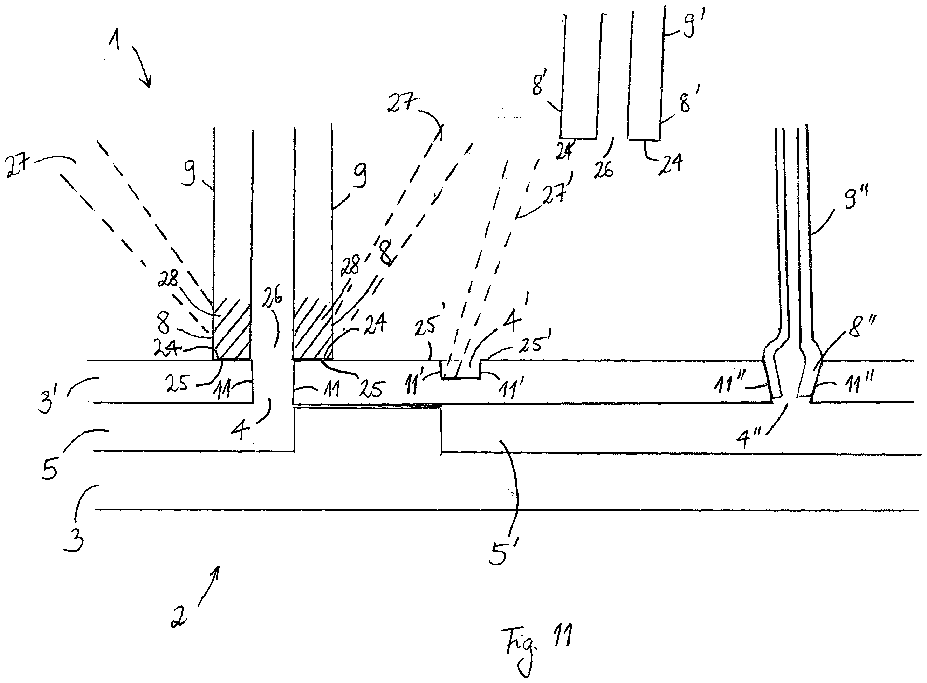

In Figur 11 ist ein weiteres Ausführungsbeispiel eines mikrofluidischen Systems 1 hier vorgeschlagener Art schematisch dargestellt. Es umfasst einen Mikrofluidikchip 2, der ein Substrat mit zwei Substratschichten 3 und 3' aufweist, die jeweils aus Borosilikatglas gefertigt sind. In die untere Substratschicht 3 sind zwei mikrofluidische Kanäle 5 und 5' eingearbeitet sind. In der oberen Substratschicht 3' sind drei Ein/Auslassöffnungen 4, 4', 4" zu erkennen, die jeweils in einen der beiden Kanäle 5 oder 5' münden.

An der linken Ein/Auslassöffnung 4 wird momentan eine erste Kapillare 9 aus Kieselglas stoffschlüssig mittels eines Diffusionsschweißverfahrens verbunden, indem eine Stirnfläche 24 eines Endstücks 8 der Kapillare 9 zunächst auf eine Außenfläche 25 der Substratschicht 3' formschlüssig so aufgesetzt und angedrückt wird, dass eine endseitige Ein/Auslassöffnung der Kapillare 8 mit der Ein/Auslassöffnung 4 fluchtet. Anschließend wird die Kapillare mit einem mit Laserstrahlen eines CO₂-Lasers (hier nicht dargestellt) bis kurz vor einer Ausbildung eine schmelzflüssigen Phase erwärmt. Dabei wird der Laserstrahl mittels (hier nicht abgebildeten) Umlenkspiegeln alternierend von zwei entgegengesetzten Seiten der Kapillare auf das Endstück 8 der Kapillare gerichtet, so dass ein räumlich homogener Wärmeeintrag in die Kapillare 9 erzielt wird.

Der Laserstrahl 27 trifft mit seinem Intensitätsmaximum auf das Endstück 8 der Kapillare 9, so dass mit dem Laserstrahl 27 direkt nur wenig oder überhaupt keine Wärmeenergie in die Substratschicht 3' eingestrahlt wird. Die Substratschicht 3' wird hauptsächlich durch Wärmeleitung erwärmt, indem ein Teil der in die Kapillare 9 eingestrahlten Wärmeenergie durch die Kapillare 8 in die Substratschicht 3' geleitet wird, so dass sich diese ebenfalls bis kurz vor Erreichen einer schmelzflüssigen Phase, also etwa bis 550 °C. Durch diesen Wärmeeintrag diffundieren Atomen, wie etwa Alkali- oder Erdalkaliatomen, aus der Substratschicht 3' in eine Diffusionszone 28 (schraffiert dargestellt) im Endstück 8 der Kapillare 9 hinein und werden dort eingelagert, so dass sich ein Ausdehnungskoeffizient des Endstücks 8 an den Ausdehnungskoeffizienten der Substratschicht lokal annähert. Dies hat zur Folge, dass sich bei anschließenden Abkühlen der Kapillare 9 und der Substratschicht 3' nur relativ geringe mechanische Spannungen zwischen diesen beiden Fügepartnern 9 und 3' ausbilden und ein Aufbrechen der stoffschlüssigen Verbindung vermieden wird.

Die zweite Ein/Auslassöffnung 4' ist noch nicht fertig ausgebildet sondern wird momentan mit einem pulsierenden und trepanierenden Laserstrahl 27' eines weiteren CO₂-Lasers (hier nicht dargestellt) in die oberer Substratschicht eingearbeitet. Dieses Laserbohrverfahren wird soweit fortgesetzt, bis diese Ein/Auslassöffnung in den Kanal 5' mündet. In einem sich direkt anschließenden Arbeitsschritt wird eine zweite, ebenfalls aus Kieselglas gefertigte Kapillare 8' mit einer Stirnfläche 24' der Kapillare 9' auf eine an dieses Ein/Auslassöffnung 4' angrenzende Außenfläche 25' der Substratschicht 3' so aufgesetzt, dass eine endseitige Ein/Auslassöffnung 26' der Kapillare 4' mit der Ein/Auslassöffnung 4' fluchtet. Danach wird mit demselben CO₂-Laser, mit dem momentan die Ein/Auslassöffnung 4' hergestellt wird, die Kapillare 9' diffusionsverschweißt, wie oben im Fall der ersten Kapillare 9 beschrieben worden ist.

In die dritte Ein/Auslassöffnung 4" ist ein Endstück 8" einer dritten, ebenfalls aus Kieselglas gefertigten Kapillare 9" eingeführt und mit einer Innenwand 11' dieser Ein/Auslassöffnung 4" mit einem CO₂-Laser diffusionsverschweißt. Bei dem Diffusionsschweißen wurde ein Innendruck der Kapillare soweit erhöht, dass sich das erwärmte Endstück 8" der Kapillare 9" bis an die Innenwand 11' aufweitete, so dass eine große Kontaktfläche zwischen der Innenwand 11" und dem Endstück 8" ausgebildet hat.

Bereits vor der Verbindung der Kapillare 8" mit der Substratschicht 3' wurde mit dem CO₂-Laser eine Verformungszone 29 kurz oberhalb des Endstücks 8" erwärmt und die Kapillare 9" in dieser Verformungszone 29 um etwa 90° mit einem Krümmungsradius in gebogen, der etwa dem äußeren Durchmesser der Kapillare entspricht. Selbstverständlich sind neben 90° auch beliebige andere Winkel realisierbar. Beim Biegen der Kapillare wurde ein Innendruck der Kapillare kontinuierlich von etwa 0,5 bar auf etwa 1,5 bar Überdruck gegenüber dem Atmosphärendruck erhöht, um ein Kollabieren der Kapillare in der Verformungszone zu verhindern.

Anschließend werden die drei Kapillaren jeweils mit einer Stabilisierungsschicht beschichtet (Recoating), wie bereits anhand der vorangehenden Ausführungsbeispiele beschrieben worden ist.

Alternativ könnten die Kapillaren 9, 9' und 9" jeweils aber genauso gut mit der Substratschicht 3' mittels der Laserstrahlung 27 verlötet werden. Hierbei wird im Fall der Kapillaren 9 und 9' zwischen der Außenfläche 25 bzw. 25' der Substratschicht 3' und der Stirnfläche 24 bzw. 24' der Kapillare 9 bzw. 9' ein Lot eingebracht oder eine der beiden Flächen 25 oder 24 mit einem Lot beschichtet. Im Fall der Kapillare 9" wird, wie bereits in den vorausgehenden Beispielen beschrieben, das zwischen das Endstück 8" der Kapillare und die Innenfläche 11' der Ein/Auslassöffnung eingebracht oder das Endstück 8" oder die Innenfläche 11" zuvor mit einem Lot beschichtet. Das Lot kann jeweils durch eines der oben genannten Glaslote oder eines der anderen genannten Lotmaterialien ausgewählt sein.

### Bezugszeichenliste:

- 1: Mikrofluidisches System
- 2: Mikrofluidikchip
- 3, 3', 3", 3''': Substratschicht
- 4, 4', 4", 4''': Ein/Auslassöffnung
- 5, 5': mikrofluidischer Kanal
- 6: Stirnseite
- 7: Oberseite
- 8, 8', 8", 8''': Endstück
- 9, 9', 9", 9''': Kapillare
- 10, 10', 10", 10''': Außenwand
- 11, 11', 11", 11''': Innenwand
- 12, 12', 12", 12''': Endfläche des Endstücks
- 13: Laser
- 14: Lot
- 15: gebogener Abschnitt
- 16: Fügebereich
- 17: Stabilisierungsschicht
- 18, 18': Anschlag
- 19: Bauteil
- 20, 20': Pumpe
- 21: bioaktive Beschichtung
- 22: Beschichtung der Kapillare
- 23: Verbund
- 24, 24': Stirnfläche einer Kapillare
- 25: Außenfläche der Substratschicht
- 26: Ein/Auslassöffnung der Kapillare
- 27, 27': Laserstrahl
- 28: Diffusionszone einer Kapillare
- 29: Verformungszone einer Kapillare

## Patentansprüche

1. Mikrofluidisches System (1) mit einem Mikrofluidikchip (2) und einer aus Glas gefertigten Kapillare (9, 9', 9", 9'''), wobei ein Endstück (8, 8', 8", 8''') der Kapillare (9, 9', 9", 9''') mit mindestens einer aus Glas gefertigten Substratschicht (3, 3', 3", 3''') des Mikrofluidikchips (2) stoffschlüssig verbunden ist, wobei die mindestens eine Substratschicht (3, 3', 3", 3''') eine Innenwand (11, 11', 11", 11''') einer Ein/Auslassöffnung (4, 4', 4", 4''') des Mikrofluidikchips (2) bildet,
**dadurch gekennzeichnet,**
- **dass** das Endstück (8, 8', 8", 8''') der Kapillare (9, 9', 9", 9''') in die Ein/Auslassöffnung (4, 4', 4", 4''') eingeführt ist und mit der Innenwand (11, 11', 11", 11''') der Ein/Auslassöffnung (4, 4', 4", 4''') verschweißt ist oder
- **dass** eine Stirnfläche des Endstücks (8, 8', 8", 8''') mit einer an die Innenwand (11, 11', 11", 11''') der Ein/Auslassöffnung (4, 4', 4", 4''') angrenzenden Außenfläche der mindestens einen Substratschicht (3, 3', 3", 3''') verschweißt ist, **dadurch gekennzeichnet, dass** das Endstück (8, 8', 8", 8''') der Kapillare (9, 9', 9", 9''') mit der mindestens einen Substratschicht (3, 3', 3", 3''') diffusionsverschweißt ist.

2. Mikrofluidisches System (1) aus Anspruch 1, **dadurch gekennzeichnet, dass** in dem Endstück (8, 8', 8", 8''') der Kapillare (9, 9', 9", 9''') in einer an die mindestens eine Substratschicht (3, 3', 3", 3''') angrenzenden ersten Diffusionszone Atome eingelagert sind, die aus der mindestens einen Substratschicht (3, 3', 3", 3''') in diese erste Diffusionszone hinein diffundiert sind, und/oder dass in der mindestens einen Substratschicht (3, 3', 3", 3''') in einer an das Endstück (8, 8', 8", 8''') der Kapillare (9, 9', 9", 9''') angrenzenden zweiten Diffusionszone Atome eingelagert sind, die aus dem Endstück (8, 8', 8", 8''') der Kapillare (9, 9', 9", 9''') in diese zweite Diffusionszone hinein diffundiert sind.

3. Mikrofluidisches System (1) nach einem der vorausgehenden Ansprüche, **dadurch gekennzeichnet**, das die mindestens eine Substratschicht aus Borosilikatglas (3, 3', 3", 3''') gefertigt ist und dass die Kapillare (9, 9', 9", 9''') aus Kieselglas gefertigt ist.

4. Mikrofluidisches System (1) nach einem der vorausgehenden Ansprüche, **dadurch gekennzeichnet, dass** das Endstück (8, 8', 8", 8''') der Kapillare (9, 9', 9", 9''') zumindest teilweise aufgeweitet ist zur Vergrößerung einer Kontaktfläche zwischen dem Endstück (8, 8', 8", 8''') und der Innenwand (11, 11', 11", 11''') der Ein/Auslassöffnung (4, 4', 4", 4''').

5. Mikrofluidisches System (1) nach einem der vorausgehenden Ansprüche, **dadurch gekennzeichnet, dass** ein Fügebereich (16), der einen an das Endstück (8, 8', 8", 8''') der Kapillare (9, 9', 9", 9''') angrenzenden Bereich einer Außenwand der Kapillare (9, 9', 9", 9''') und eine an die Innenwand (11, 11', 11", 11''') der Ein/Auslassöffnung (4, 4', 4", 4''') angrenzende Außenfläche des Mikrofluidikchips (2) umfasst, mit einer durchgängigen Stabilisierungsschicht (17) beschichtet ist für eine mechanische Stabilisierung der stoffschlüssigen Verbindung zwischen der Kapillare (9, 9', 9", 9''') und dem Mikrofluidikchip (2).

6. Mikrofluidisches System (1) nach einem der vorausgehenden Ansprüche, **dadurch gekennzeichnet, dass** die Kapillare (9, 9', 9", 9''') oberhalb des in die Ein/Auslassöffnung (4, 4', 4", 4''') eingeführten Endstücks (8, 8', 8", 8''') gebogen ist mit einem Krümmungsradius kleiner als dem Dreifachen eines äußeren Durchmessers der Kapillare.

7. Herstellungsverfahren für ein mikrofluidisches System (1) mit einem Mikrofluidikchip (2) und einer aus Glas gefertigten Kapillare (9, 9', 9", 9'''), bei dem ein Endstück (8, 8', 8", 8''') der Kapillare (9, 9', 9", 9''') mit mindestens einer aus Glas gefertigten Substratschicht (3, 3', 3", 3''') des Mikrofluidikchips (2) stoffschlüssig verbunden wird, wobei die mindestens eine Substratschicht (3, 3', 3", 3''') eine Innenwand (11, 11', 11", 11''') einer Ein/Auslassöffnung (4, 4', 4", 4''') des Mikrofluidikchips (2) bildet,
**dadurch gekennzeichnet,**
- **dass** das Endstück (8, 8', 8", 8''') der Kapillare (9, 9', 9", 9''') in die Ein/Auslassöffnung (4, 4', 4", 4''') eingeführt wird und mit der Innenwand (11, 11', 11", 11''') der Ein/Auslassöffnung (4, 4', 4", 4''') mit einem Laser verschweißt wird oder
- **dass** eine Stirnseite des Endstücks (8, 8', 8", 8''') mit einer an die Innenwand (11, 11', 11", 11''') der Ein/Auslassöffnung (4, 4', 4", 4''') angrenzenden Außenfläche der mindestens einen Substratschicht (3, 3', 3", 3''') mit einem Laser verschweißt wird, wobei das Endstück (8, 8', 8", 8''') der Kapillare (9, 9', 9", 9''') mit der mindestens einen Substratschicht (3, 3', 3", 3''') diffusionsverschweißt wird.

8. Herstellungsverfahren nach Anspruch 7, **dadurch gekennzeichnet, dass** aus der mindestens einen Substratschicht (3, 3', 3", 3''') Atome in eine an die mindestens eine Substratschicht (3, 3', 3", 3''') angrenzende ersten Diffusionszone innerhalb des Endstücks (8, 8', 8", 8''') der Kapillare (9, 9', 9", 9''') hinein diffundieren und in dieser erste Diffusionszone eingelagert werden und/oder dass aus dem Endstück (8, 8', 8", 8''') der Kapillare (9, 9', 9", 9''') Atome in eine an das Endstück (8, 8', 8", 8''') der Kapillare (9, 9', 9", 9''') angrenzende zweiten Diffusionszone innerhalb der mindestens einen Substratschicht (3, 3', 3", 3''') hinein diffundieren und in dieser zweiten Diffusionszone eingelagert werden.

9. Herstellungsverfahren nach einem der Ansprüche 7 oder 8, **dadurch gekennzeichnet, dass** die mindestens eine Substratschicht (3, 3', 3", 3''') aus Borosilikatglas gefertigt wird und dass die Kapillare (9, 9', 9", 9''') aus Kieselglas gefertigt wird.

10. Herstellungsverfahren nach einem der Ansprüche 7 bis 9, **dadurch gekennzeichnet, dass** in der erwärmten Kapillare (9, 9', 9", 9''') ein Überdruck erzeugt wird, so dass sich das in die Ein/Auslassöffnung eingeführte und erwärmte Endstück (8, 8', 8", 8''') der Kapillare (9, 9', 9", 9''') zumindest bereichsweise aufweitet und sich hierdurch eine Kontaktfläche zwischen dem Endstück (8, 8', 8", 8''') und der Innenwand (11, 11', 11", 11''') der Ein/Auslassöffnung (4, 4', 4", 4''') vergrößert.

11. Herstellungsverfahren nach einem der Ansprüche 7 bis 10, **dadurch gekennzeichnet, dass** in der Kapillare (9") ein Überdruck erzeugt wird, eine Verformungszone (29) der Kapillare (9") oberhalb des Endstücks (8") der Kapillare (9") mit einem Laser erwärmt wird und die Kapillare (9") in der Verformungszone (29) gebogen wird, wobei der Überdruck in der Kapillare (9") so eingestellt wird, dass ein Kollabieren oder Knicken der Kapillare (9") in der Verformungszone (29) vermieden wird.

12. Herstellungsverfahren nach einem der Ansprüche 7 bis 11, **dadurch gekennzeichnet, dass** die Ein/Auslassöffnung (4, 4', 4", 4''') mit dem Laser (13) in die mindestens eine Substratschicht (3, 3', 3", 3''') eingearbeitet wird.

13. Herstellungsverfahren nach einem der Ansprüche 7 bis 12, **dadurch gekennzeichnet, dass** ein Fügebereich (16), der einen an das Endstück (8, 8', 8", 8''') der Kapillare (9, 9', 9", 9''') angrenzenden Bereich einer Außenwand der Kapillare (9, 9', 9", 9''') und eine an die Innenwand (11, 11', 11", 11''') der Ein/Auslassöffnung (4, 4', 4", 4''') angrenzende Außenfläche des Mikrofluidchips (2) umfasst, mit einer durchgängigen Stabilisierungsschicht beschichtet wird für eine mechanische Stabilisierung der stoffschlüssigen Verbindung zwischen der Kapillare (9, 9', 9", 9''') und dem Mikrofluidikchip (2).

## Claims

1. A microfluidic system (1) comprising a microfluidic chip (2) and a capillary tube (9, 9', 9", 9''') made of glass, an end piece (8, 8', 8", 8''') of the capillary tube (9, 9', 9", 9''') being integrally bonded to at least one substrate layer (3, 3', 3", 3''') of the microfluidic chip (2) made of glass, the at least one substrate layer (3, 3', 3", 3''') forming an inner wall (11, 11', 11", 11''') of an inlet/outlet opening (4, 4', 4", 4''') of the microfluidic chip (2),
**characterized in that**
- the end piece (8, 8', 8", 8''') of the capillary tube (9, 9', 9", 9''') is inserted into the inlet/outlet opening (4, 4', 4", 4''') and welded to the inner wall (11, 11', 11", 11''') of the inlet/outlet opening (4, 4', 4", 4'''), or
- an end face of the end piece (8, 8', 8", 8''') is welded to an outer surface of the at least one substrate layer (3, 3', 3", 3''') abutting the inner wall (11, 11', 11", 11''') of the inlet/outlet opening (4, 4', 4", 4'''),
**characterized in that**
- the end piece (8, 8', 8", 8''') of the capillary tube (9, 9', 9", 9''') is diffusion welded to the at least one substrate layer (3, 3', 3", 3''').

2. The microfluidic system (1) according to claim 1, **characterized in that** atoms are incorporated in the end piece (8, 8', 8", 8''') of the capillary tube (9, 9', 9", 9''') in a first diffusion zone abutting the at least one substrate layer (3, 3', 3", 3'''), the atoms having diffused from the at least one substrate layer (3, 3', 3", 3''') into this first diffusion zone, and/or atoms are incorporated in the at least one substrate layer (3, 3', 3", 3''') in a second diffusion zone abutting the end piece (8, 8', 8", 8''') of the capillary tube (9, 9', 9", 9'''), the atoms having diffused from the end piece (8, 8', 8", 8''') of the capillary tube (9, 9', 9", 9''') into this second diffusion zone.

3. The microfluidic system (1) according to any one of the preceding claims, **characterized in that** the at least one substrate layer is made of borosilicate glass (3, 3', 3", 3'''), and the capillary tube (9, 9', 9", 9''') is made of silica glass.

4. The microfluidic system (1) according to any one of the preceding claims, **characterized in that** the end piece (8, 8', 8", 8''') of the capillary tube (9, 9', 9", 9''') is at least partially expanded so as to increase a contact surface between the end piece (8, 8', 8", 8''') and the inner wall (11, 11', 11", 11''') of the inlet/outlet opening (4, 4', 4", 4''').

5. The microfluidic system (1) according to any one of the preceding claims, **characterized in that** a joining region (16), which includes a region of an outer wall of the capillary tube (9, 9', 9", 9''') abutting the end piece (8, 8', 8", 8''') of the capillary tube (9, 9', 9", 9''') and an outer surface of the microfluidic chip (2) abutting the inner wall (11, 11', 11", 11''') of the inlet/outlet opening (4, 4', 4", 4'''), is coated with a continuous stabilization layer (17) so as to mechanically stabilize the integral bond between the capillary tube (9, 9', 9", 9''') and the microfluidic chip (2).

6. The microfluidic system (1) according to any one of the preceding claims, **characterized in that** the capillary tube (9, 9', 9", 9''') is bent above the end piece (8, 8', 8", 8''') inserted into the inlet/outlet opening (4, 4', 4", 4'''), having a radius of curvature smaller than three times an outer diameter of the capillary tube.

7. A production method for a microfluidic system (1) comprising a microfluidic chip (2) and a capillary tube (9, 9', 9", 9''') made of glass, in which an end piece (8, 8', 8", 8''') of the capillary (9, 9', 9", 9''') is integrally bonded to at least one substrate layer (3, 3', 3", 3''') of the microfluidic chip (2) made of glass, the at least one substrate layer (3, 3', 3", 3''') forming an inner wall (11, 11', 11", 11''') of an inlet/outlet opening (4, 4', 4", 4''') of the microfluidic chip (2), **characterized in that**
- the end piece (8, 8', 8", 8''') of the capillary tube (9, 9', 9", 9''') is inserted into the inlet/outlet opening (4, 4', 4", 4''') and is welded to the inner wall (11, 11', 11", 11''') of the inlet/outlet opening (4, 4', 4", 4''') by way of a laser, or
- an end face of the end piece (8, 8', 8", 8''') is welded to an outer surface of the at least one substrate layer (3, 3', 3", 3''') abutting the inner wall (11, 11', 11", 11''') of the inlet/outlet opening (4, 4', 4", 4''') by way of a laser, the end piece (8, 8', 8", 8''') of the capillary tube (9, 9', 9", 9''') being diffusion welded to the at least one substrate layer (3, 3', 3", 3''').

8. The production method according to claim 7, **characterized in that** atoms diffuse from the at least one substrate layer (3, 3', 3", 3''') into a first diffusion zone within the end piece (8, 8', 8", 8''') of the capillary tube (9, 9', 9", 9''') abutting the at least one substrate layer (3, 3', 3", 3''') and are incorporated in this first diffusion zone, and/or atoms diffuse from the end piece (8, 8', 8", 8''') of the capillary tube (9, 9', 9", 9''') into a second diffusion zone within the at least one substrate layer (3, 3', 3", 3''') abutting the end piece (8, 8', 8", 8''') of the capillary tube (9, 9', 9", 9''') and are incorporated in this second diffusion zone.

9. The production method according to claim 7 or 8, **characterized in that** the at least one substrate layer (3, 3', 3", 3'''') is made of borosilicate glass, and the capillary tube (9, 9', 9", 9''') is made of silica glass.

10. The production method according to any one of claims 7 to 9, **characterized in that** overpressure is generated in the heated capillary tube (9, 9', 9", 9'''), so that the heated end piece (8, 8', 8", 8''') of the capillary tube (9, 9', 9", 9''') inserted into the inlet/outlet opening is expanded at least in some regions, and a contact surface between the end piece (8, 8', 8", 8''') and the inner wall (11, 11', 11", 11''') of the inlet/outlet opening (4, 4', 4", 4''') is increased thereby.

11. The production method according to any one of claims 7 to 10, **characterized in that** overpressure is generated in the capillary tube (9"), a deformation zone (29) of the capillary tube (9") above the end piece (8") of the capillary tube (9") is heated by a laser, and the capillary tube (9") is bent in the deformation zone (29), the overpressure being set in the capillary tube (9") so that collapsing or bending of the capillary tube (9") in the deformation zone (29) is avoided.

12. The production method according to any one of claims 7 to 11, **characterized in that** the inlet/outlet opening (4, 4', 4", 4''') is worked into the at least one substrate layer (3, 3', 3", 3''') by way of the laser (13).

13. The production method according to any one of claims 7 to 12, **characterized in that** a joining region (16), which includes a region of an outer wall of the capillary tube (9, 9', 9", 9''') abutting the end piece (8, 8', 8", 8''') of the capillary tube (9, 9', 9", 9''') and an outer surface of the microfluidic chip (2) abutting the inner wall (11, 11', 11", 11''') of the inlet/outlet opening (4, 4', 4", 4'''), is coated with a continuous stabilization layer so as to mechanically stabilize the integral bond between the capillary tube (9, 9', 9", 9''') and the microfluidic chip (2).

## Revendications

1. Système microfluidique (1) avec une puce microfluidique (2) et un capillaire (9, 9', 9", 9''') constitué de verre, un embout (8, 8', 8", 8''') du capillaire (9, 9', 9", 9''') étant relié par liaison de matière avec au moins une couche de substrat (3, 3', 3", 3'''), constituée de verre, de la puce microfluidique (2), l'au moins une couche de substrat (3, 3', 3", 3''') formant une paroi interne (11, 11', 11", 11''') d'une ouverture d'entrée/sortie (4, 4', 4", 4''') de la puce microfluidique (2),
**caractérisé en ce que**
- l'embout (8, 8', 8", 8''') du capillaire (9, 9', 9", 9''') est inséré dans l'ouverture d'entrée/sortie (4, 4', 4", 4''') et est soudé avec la paroi interne (11, 11', 11", 11''') de l'ouverture d'entrée/sortie (4, 4', 4", 4''') ou
- une face frontale de l'embout (8, 8', 8", 8''') est soudée avec une surface externe de l'au moins une couche de substrat (3, 3', 3", 3''') adjacente à la paroi interne (11, 11', 11", 11''') de l'ouverture d'entrée/sortie (4, 4', 4", 4'''),
**caractérisé en ce que**
l'embout (8, 8', 8", 8''') du capillaire (9, 9', 9", 9''') est soudé par diffusion avec l'au moins une couche de substrat (3, 3', 3", 3''').

2. Système microfluidique (1) selon la revendication 1, **caractérisé en ce que**, dans l'embout (8, 8', 8", 8''') du capillaire (9, 9', 9", 9'''), dans une première zone de diffusion adjacente à l'au moins une couche de substrat (3, 3', 3", 3'''), des atomes sont incorporés, qui sont diffusés à partir de l'au moins une couche de substrat (3, 3', 3", 3''') vers cette zone de diffusion et/ou **en ce que**, dans l'au moins une couche de substrat (3, 3', 3", 3'''), dans une deuxième zone de diffusion adjacente à l'embout (8, 8', 8", 8''') du capillaire (9, 9', 9", 9'''), sont incorporés des atomes qui sont diffusés à partir de l'embout (8, 8', 8", 8''') du capillaire (9, 9', 9", 9''') vers cette deuxième zone de diffusion.

3. Système microfluidique (1) selon l'une des revendications précédentes, **caractérisé en ce que** l'au moins une couche de substrat est constituée de verre borosilicate (3, 3', 3", 3''') et **en ce que** le capillaire (9, 9', 9", 9''') est constitué de verre de silice.

4. Système microfluidique (1) selon l'une des revendications précédentes, **caractérisé en ce que** l'embout (8, 8', 8", 8''') du capillaire (9, 9', 9", 9''') est élargi au moins partiellement afin d'augmenter une surface de contact entre l'embout (8, 8', 8", 8''') et la paroi interne (11, 11', 11", 11''') de l'ouverture d'entrée/sortie (4, 4', 4", 4''').

5. Système microfluidique (1) selon l'une des revendications précédentes, **caractérisé en ce qu'**une zone de jonction (16), qui comprend une zone d'une paroi externe du capillaire (9, 9', 9", 9''') adjacente à l'embout (8, 8', 8", 8''') et une surface externe de la puce microfluidique (2) adjacente à la paroi interne (11, 11', 11", 11''') de l'ouverture d'entrée/sortie (4, 4', 4", 4'''), est revêtue avec une couche de stabilisation (17) continue pour une stabilisation mécanique de la liaison par liaison de matière entre le capillaire (9, 9', 9", 9''') et la puce microfluidique (2).

6. Système microfluidique (1) selon l'une des revendications précédentes, **caractérisé en ce que** le capillaire (9, 9', 9", 9''') est plié au-dessus de l'embout (8, 8', 8", 8''') inséré dans l'ouverture d'entrée/sortie (4, 4', 4", 4'''), avec un rayon de courbure inférieur au triple d'un diamètre extérieur du capillaire.

7. Procédé de fabrication d'un système microfluidique (1) avec une puce microfluidique (2) et un capillaire (9, 9', 9", 9''') constitué de verre, dans lequel un embout (8, 8', 8", 8''') du capillaire (9, 9', 9", 9''') est relié par liaison de matière avec au moins une couche de substrat (3, 3', 3", 3'''), constituée de verre, de la puce microfluidique (2), l'au moins une couche de substrat (3, 3', 3", 3''') formant une paroi interne (11, 11', 11", 11''') d'une ouverture d'entrée/sortie (4, 4', 4", 4''') de la puce microfluidique (2),
**caractérisé en ce que**
- l'embout (8, 8', 8", 8''') du capillaire (9, 9', 9", 9''') est inséré dans l'ouverture d'entrée/sortie (4, 4', 4", 4''') et soudé avec la paroi interne (11, 11', 11", 11''') de l'ouverture d'entrée/sortie (4, 4', 4", 4''') avec un laser ou
- une face frontale de l'embout (8, 8', 8", 8''') est soudée avec une surface externe de l'au moins une couche de substrat (3, 3', 3", 3''') adjacente à la paroi interne (11, 11', 11", 11''') de l'ouverture d'entrée/sortie (4, 4', 4", 4''') avec un laser, l'embout (8, 8', 8", 8''') du capillaire (9, 9', 9", 9''') étant soudé par diffusion avec l'au moins une couche de substrat (3, 3', 3", 3''').

8. Procédé de fabrication selon la revendication 7, **caractérisé en ce que**, à partir de l'au moins une couche de substrat (3, 3', 3", 3'''), des atomes sont diffusés vers une première zone de diffusion, à l'intérieur de l'embout (8, 8', 8", 8''') du capillaire (9, 9', 9", 9'''), adjacente à l'au moins une couche de substrat (3, 3', 3", 3''') et incorporés dans cette première zone de diffusion et/ou **en ce que**, à partir de l'embout (8, 8', 8", 8''') du capillaire (9, 9', 9", 9'''), des atomes sont diffusés vers une deuxième zone de diffusion, à l'intérieur de l'au moins une couche de substrat (3, 3', 3", 3'''), adjacente à l'embout (8, 8', 8", 8''') du capillaire (9, 9', 9", 9''') et incorporés dans cette deuxième zone de diffusion.

9. Procédé de fabrication selon l'une des revendications 7 ou 8, **caractérisé en ce que** l'au moins une couche de substrat (3, 3', 3", 3''') est constitué d'un verre borosilicate et **en ce que** le capillaire (9, 9', 9", 9''') est constitué d'un verre de silice.

10. Procédé de fabrication selon l'une des revendications 7 à 9, **caractérisé en ce que**, dans le capillaire chauffé (9, 9', 9", 9'''), une surpression est produite, de façon à ce que l'embout (8, 8', 8", 8''') du capillaire (9, 9', 9", 9''') inséré dans l'ouverture d'entrée/sortie et chauffé s'élargisse au moins à certains endroits et une surface de contact entre l'embout (8, 8', 8", 8''') et la paroi interne (11, 11', 11", 11''') de l'ouverture d'entrée/sortie (4, 4', 4", 4''') augmente.

11. Procédé de fabrication selon l'une des revendications 7 à 10, **caractérisé en ce que**, dans le capillaire (9"), une surpression est produite, une zone de déformation (29) du capillaire (9") au-dessus de l'embout (8") du capillaire (9") est chauffée avec un laser et le capillaire (9") est plié dans la zone de déformation (29), la surpression dans le capillaire (9") étant réglée de façon à empêcher un effondrement ou une flexion du capillaire (9") dans la zone de déformation (29).

12. Procédé de fabrication selon l'une des revendications 7 à 11, **caractérisé en ce que** l'ouverture d'entrée/sortie (4, 4', 4", 4''') est réalisée avec le laser (13) dans l'au moins une couche de substrat (3, 3', 3", 3''').

13. Procédé de fabrication selon l'une des revendications 7 à 12, **caractérisé en ce qu'**une zone de jonction (16), qui comprend une zone d'une paroi extérieure du capillaire (9, 9', 9", 9''') adjacente à l'embout (8, 8', 8", 8''') du capillaire (9, 9', 9", 9''') et une surface extérieure de la puce microfluidique (2) adjacente à la paroi interne (11, 11', 11", 11''') de l'ouverture d'entrée/sortie (4, 4', 4", 4'''), est revêtue d'une couche de stabilisation continue pour une stabilisation mécanique de la liaison par liaison de matière entre le capillaire (9, 9', 9", 9''') et la puce microfluidique (2).
